# EUROPEAN PATENT APPLICATION

(11) **EP 2 778 743 A1**
(43) Date of publication of application: **17.09.2014**
(21) Application number: 14159132.1
(22) Date of filing: 12.03.2014
(51) Int. Cl.: G02B 26/00, B81B 3/00, B81C 3/00

(54) **Interference filter, interference filter manufacturing method, optical module, electronic apparatus, and bonded substrate**

(30) Priority: 14.03.2013 JP 2013051369
(71) Applicant: Seiko Epson Corporation, Shinjuku-ku, Tokyo 163-0811 (JP)
(72) Inventor: Arakawa, Katsuji, Nagano, 392-8502 (JP)
(74) Representative: HOFFMANN EITLE

(57) **Abstract**

A wavelength tunable interference filter includes a fixed substrate, a movable substrate, a fixed reflective film provided on the fixed substrate, a movable reflective film provided on the movable substrate so as to face the fixed reflective film, and a first bonding portion that bonds the fixed substrate and the movable substrate to each other. The first bonding portion includes a resin layer provided on the fixed substrate, a metal layer that is provided on the fixed substrate so as to cover the resin layer and that has smaller plasticity than the resin layer, and another metal layer that is provided on the movable substrate and that is bonded to the metal layer.

## Description

### BACKGROUND

### 1. Technical Field

The present invention relates to an interference filter, an interference filter manufacturing method, an optical module, an electronic apparatus, and a bonded substrate.

### 2. Related Art

A spectral filter to obtain light having a specific wavelength from incident light by reflecting light between a pair of reflecting mirrors and transmitting light having a specific wavelength and canceling light beams having other wavelengths out each other by interference is known. In addition, as such a spectral filter, a wavelength tunable interference filter that selects emitted light by adjusting the distance between mirrors and emits the selected light is known (for example, refer to JP-A-2005-309174).

A wavelength tunable interference filter disclosed in JP-A-2005-309174 includes a first glass substrate having a first reflective film, a movable substrate that is bonded to the first glass substrate and has a second reflective film facing the first reflective film, and a second glass substrate bonded to the movable substrate not facing the first glass substrate. In such a wavelength tunable interference filter, it is possible to change the size of the gap between the reflective films by an electrostatic actuator provided between the first glass substrate and the movable substrate. As a result, it is possible to transmit or reflect light having a wavelength corresponding to the gap size. In addition, it is possible to improve the responsiveness when driving the electrostatic actuator by holding internal space (between the first glass substrate and the movable substrate and between the movable substrate and the second glass substrate) in a vacuum state or a state decompressed from atmospheric pressure.

Incidentally, in order to hold the internal space in a vacuum state or a state decompressed from atmospheric pressure in the wavelength tunable interference filter disclosed in JP-A-2005-309174, airtight sealing of the internal space is required. For such airtight sealing, airtight bonding between substrates is required. As such bonding, for example, direct activated bonding between substrates and activated bonding using metal layers interposed between substrates are appropriate. However, in order to obtain a good bonding strength in such bonding, high surface accuracy in a bonding surface is required. In particular, when processing a substrate by etching or the like, there is a problem in that it is difficult to maintain the surface accuracy.

In addition, when bonding substrates to each other using, for example, a resin layer, adhesive, or low-melting-point glass, it is not possible to sufficiently ensure the airtightness. For this reason, there is a problem of outgassing and the like.

### SUMMARY

An advantage of some aspects of the invention is to provide an interference filter in which substrates are bonded to each other with high airtightness, an interference filter manufacturing method, an optical module, an electronic apparatus, and a bonded substrate.

An aspect of the invention is directed to an interference filter including: a first substrate; a second substrate disposed so as to face the first substrate; a first reflective film that is provided on a surface of the first substrate facing the second substrate and that reflects a part of incident light and transmits a remaining part of the incident light; a second reflective film that faces the first reflective film with a gap interposed therebetween and that reflects a part of incident light and transmits a remaining part of the incident light; and a first bonding portion that bonds the first and second substrates to each other to seal a first internal space formed between the first and second substrates. The first bonding portion includes a first base layer provided on one of the first and second substrates, a first metal layer that is provided on the substrate, on which the first base layer is provided, so as to cover the first base layer and that has smaller plasticity than the first base layer, and a second metal layer that is provided on the other one of the first and second substrates and that is bonded to the first metal layer.

In this interference filter, the internal space between the first and second substrates is sealed by bonding the first and second substrates using the first bonding portion. In this first bonding portion, the first base layer and the first metal layer provided so as to cover the first base layer are provided on one of the first and second substrates. In addition, the second metal layer facing the first metal layer is provided on the other substrate, on which neither the first base layer nor the first metal layer is provided, of the first and second substrates. In addition, the first and second substrates are bonded to each other by metal bonding between the first and second metal layers.

In this interference filter, since the first base layer has larger plasticity than the first metal layer, the first base layer is easily deformed. Accordingly, even if the surface accuracy of the first or second metal layer is low at the time of metal bonding between the first and second metal layers, the facing surfaces of the first and second metal layers can be made to be in close contact with each other since the first base layer serves as a cushion. In addition, since the first metal layer covers the first base layer, the surface of the first base layer is not exposed to the outside. Therefore, the first internal space and the outside do not communicate with each other through a gap or the like contained in the first base layer. As described above, in the interference filter, it is possible to bond the first and second substrates to each other with high airtightness and to improve the bonding yield.

In the interference filter according to the aspect of the invention, it is preferable that the first bonding portion includes a second base layer that is provided on the other one of the first and second substrates and that has larger plasticity than the second metal layer, and the second metal layer is provided so as to cover the second base layer.

In the interference filter with this configuration, also on the other substrate on which the first base layer and the first metal layer are not formed, the first bonding portion is formed such that the second base layer with larger plasticity than the second metal layer is provided and the second metal layer covers the second base layer. Accordingly, even if the surface accuracy of the surface of each metal layer is poor at the time of metal bonding between the first and second metal layers, the unevenness of the surface is absorbed since both of the first and second base layers serve as a cushion. As a result, the facing surfaces of the first and second metal layers can be made to be in close contact with each other. Therefore, compared with a case where only the first base layer is provided, it is possible to further improve the adhesion between the metal layers, and it is possible to further improve the airtightness in the first bonding portion.

In the interference filter according to the aspect of the invention, it is preferable that the interference filter further includes: a third substrate disposed on a side of a surface of the first substrate not facing the second substrate; and a second bonding portion that bonds the first and third substrates to each other to seal a second internal space formed between the first and third substrates, and the second bonding portion includes a third base layer provided on one of the first and third substrates, a third metal layer that is provided on the substrate, on which the third base layer is provided, so as to cover the third base layer and that has smaller plasticity than the third base layer, and a fourth metal layer that is provided on the other one of the first and third substrates and that is bonded to the third metal layer.

In the interference filter with this configuration, the third substrate is bonded to the side of the first substrate not facing the second substrate, and the second internal space between the first and third substrates is sealed in an airtight manner. In addition, the same configuration as the first bonding portion is used as the second bonding portion that bonds these substrates to each other. Therefore, it is possible to bond the first and third substrates to each other with high airtightness and to improve the bonding yield.

In the interference filter according to the aspect of the invention, it is preferable that the second bonding portion includes a fourth base layer that is provided on the other one of the first and third substrates and that has larger plasticity than the fourth metal layer, and the fourth metal layer is provided so as to cover the fourth base layer.

In the interference filter with this configuration, also on the other substrate on which the third base layer and the third metal layer are not formed, the second bonding portion is formed such that the fourth base layer with larger plasticity than the fourth metal layer is provided and the fourth metal layer covers the fourth base layer. Accordingly, even if the surface accuracy of the surface of each metal layer is poor at the time of metal bonding between the third and fourth metal layers, the unevenness of the surface is absorbed since both of the third and fourth base layers serve as a cushion. As a result, the facing surfaces of the respective metal layers can be made to be in close contact with each other. Therefore, compared with a case where only the third base layer is provided, it is possible to further improve the airtightness in the second bonding portion.

Another aspect of the invention is directed to an interference filter including: a first substrate; a second substrate disposed so as to face the first substrate; a first reflective film that is provided on a surface of the first substrate facing the second substrate and that reflects a part of incident light and transmits a remaining part of the incident light; a second reflective film that faces the first reflective film with a gap interposed therebetween and that reflects a part of incident light and transmits a remaining part of the incident light; and a first bonding portion that bonds the first and second substrates to each other to seal a first internal space formed between the first and second substrates. The first bonding portion includes a first base layer that is formed of resin and is provided on one of the first and second substrates, a first metal layer that is provided on the substrate, on which the first base layer is provided, so as to cover the first base layer, and a second metal layer that is provided on the other one of the first and second substrates and that is bonded to the first metal layer.

In this interference filter, the first metal layer is provided so as to cover the first base layer formed of resin, and the first and second metal layers are metal-bonded to each other.

Since the first base layer is resin, the first base layer is deformed more easily than the first metal layer (has larger plasticity than the first metal layer). Accordingly, similar to the above, even if the surface accuracy of the first or second metal layer is low at the time of metal bonding between the first and second metal layers, the facing surfaces of the first and second metal layers can be made to be in close contact with each other since the first base layer can serve as a cushion. In addition, the first base layer is covered by the first metal layer serving as an excellent gas barrier, and the substrates are bonded to each other by metal bonding between the first and second metal layers. In this manner, it is possible to bond the first and second substrates to each other with high airtightness.

In the interference filter according to the aspect of the invention, it is preferable that the first bonding portion includes a second base layer that is formed of resin and is provided on the other one of the first and second substrates, and the second metal layer is provided so as to cover the second base layer.

In the interference filter with this configuration, also on the other substrate on which the first base layer and the first metal layer are not formed, the first bonding portion is formed such that the second base layer formed of resin is provided and the second metal layer covers the second base layer. Therefore, similar to the above, compared with a case where only the first base layer is provided, it is possible to further improve the adhesion between the metal layers, and it is possible to further improve the airtightness in the first bonding portion.

In the interference filter according to the aspect of the invention, it is preferable that the interference filter further includes: a third substrate disposed on a side of a surface of the first substrate not facing the second substrate; and a second bonding portion that bonds the first and third substrates to each other to seal a second internal space formed between the first and third substrates, and the second bonding portion includes a third base layer that is formed of resin and is provided on one of the first and third substrates, a third metal layer that is provided on the substrate, on which the third base layer is provided, so as to cover the third base layer, and a fourth metal layer that is provided on the other one of the first and third substrates and that is bonded to the third metal layer.

In the interference filter with this configuration, the third substrate is bonded to the side of the first substrate not facing the second substrate, and the first and third substrates are bonded to each other by the second bonding portion. As the second bonding portion, the same configuration as the first bonding portion is used. Therefore, similar to the above, it is possible to bond the first and third substrates to each other with high airtightness and to improve the bonding yield.

In the interference filter according to the aspect of the invention, it is preferable that the second bonding portion includes a fourth base layer that is formed of resin and is provided on the other one of the first and third substrates, and the fourth metal layer is provided so as to cover the fourth base layer.

In the interference filter with this configuration, also on the other substrate on which the third base layer and the third metal layer are not formed, the second bonding portion is formed such that the fourth base layer formed of resin is provided and the fourth metal layer covers the fourth base layer. Therefore, similar to the above, even if the surface accuracy of the surface of each metal layer is poor at the time of metal bonding between the third and fourth metal layers, the surfaces of the respective metal layers can be made to be in close contact with each other. Therefore, compared with a case where only the third base layer is provided, it is possible to further improve the airtightness and the bonding yield in the second bonding portion.

In the interference filter according to the aspect of the invention, it is preferable that the interference filter further includes a gap change portion that changes a size of a gap between the first and second reflective films. Preferably, the first and second internal spaces are sealed at pressure lower than atmospheric pressure.

In the interference filter with this configuration, since the gap change portion is provided, the size of the gap between the first and second reflective films can be changed. In this case, the first and second internal spaces are decompressed to the pressure lower than atmospheric pressure. For example, the first and second internal spaces are maintained in a vacuum state. In such a configuration, since both of the first and second internal spaces are decompressed, it is possible to suppress the disadvantage that the first substrate is bent due to the pressure difference. In addition, since the first internal space is decompressed, it is possible to reduce air resistance when changing the size of the gap between the reflective films by the gap change portion. As a result, it is possible to improve the responsiveness.

In the interference filter according to the aspect of the invention, it is preferable that the second substrate has a bonding surface facing the first substrate and a first surface, a distance between the first surface and the first substrate being longer than a distance between the bonding surface and the first substrate. Preferably, the base layer is provided over the first surface from the bonding surface.

In the interference filter with this configuration, the second substrate has the bonding surface and the first surface, the distance between the first surface and the first substrate being longer than the distance between the bonding surface and the first substrate. In addition, the base layer is provided over the first surface from the bonding surface. For example, when providing the first base layer on the second substrate, the first surface is formed by forming a recess or a groove by processing the second substrate by etching or the like, and a surface with no recess and groove becomes the bonding surface. In addition, the first base layer is provided over the first surface from the bonding surface, and the first metal layer is provided so as to cover the first base layer.

When providing a base layer on a plane, the outer peripheral edge of the base layer may rise, and accordingly, the thickness of the outer peripheral edge of the base layer may become larger than that of other portions (central region of the base layer). In this case, even if a metal layer is provided so as to cover the base layer, the metal layer also rises according to the rise of the outer peripheral edge of the base layer. Accordingly, when bonding the metal layer to a metal layer provided on the facing substrate, the rise portion comes in contact with the metal layer provided on the facing substrate. As a result, there is a possibility that the contact area between the metal layers will be reduced. In contrast, in the interference filter according to the aspect of the invention, the base layer is provided over the first surface from the bonding surface. For this reason, even if the outer peripheral edge of the base layer rises, contact between the metal layers provided above the bonding surface is not prohibited since the outer peripheral edge is located on the first surface with a long distance between substrates. Therefore, since the contact area between the metal layers can be sufficiently ensured, it is possible to bond substrates to each other while maintaining the high airtightness of the first internal space.

In the interference filter according to the aspect of the invention, it is preferable that the second substrate has a bonding surface facing the first substrate and a first surface, a distance between the first surface and the first substrate being longer than a distance between the bonding surface and the first substrate. Preferably, the base layer is provided over a portion of the first substrate facing the first surface from a portion of the first substrate facing the bonding surface.

In the interference filter with this configuration, similar to the above, the second substrate has the bonding surface and the first surface, the distance between the first surface and the first substrate being longer than the distance between the bonding surface and the first substrate. In addition, the base layer is provided over the first surface from the bonding surface. In addition, the base layer is provided over a portion of the first substrate facing the first surface from a portion of the first substrate facing the bonding surface, and the metal layer is provided so as to cover the base layer.

Also in this configuration, similar to the above, even if the peripheral edge of the base layer rises, contact between the metal layers provided above the bonding surface is not prohibited since the outer peripheral edge is located in a portion facing the first surface with a long distance between substrates. Therefore, since the contact area between the metal layers can be sufficiently ensured, it is possible to bond substrates to each other while maintaining the high airtightness of the first internal space.

In the interference filter according to the aspect of the invention, it is preferable that the base layer is a resin layer.

In the first or second bonding portion described above, since the base layer (first to fourth base layers) is a resin layer, the base layer (first to fourth base layers) is harder than the metal layer (first to fourth metal layers), and has sufficiently large plasticity (is easily deformed). Accordingly, since the resin layer bends to serve as a cushion at the time of metal bonding between the metal layers, surface contact between the metal layers can be appropriately performed even if the surface accuracy of the metal layer is poor. As a result, it is possible to bond the substrates to each other with high airtightness.

In the interference filter according to the aspect of the invention, it is preferable that the base layer is a plasma polymerized film containing polyorganosiloxane as a main component.

In the interference filter with this configuration, the plasma polymerized film is used as a base layer. Such a plasma polymerized film can be easily formed by a dry process using a metal mask. Therefore, it is possible to improve the manufacturing efficiency and reduce the manufacturing cost.

In the interference filter according to the aspect of the invention, it is preferable that the base layer is formed of an epoxy-based photosensitive material.

When using the epoxy-based photosensitive material as a resin layer used in the base layer, the size and position of the resin layer can be accurately determined. That is, in the method using a metal mask described above, the manufacturing efficiency is improved, but the resin layer may enter below the metal mask. For this reason, the size or position accuracy is degraded. In contrast, when using the epoxy-based photosensitive material, the size and the position can be accurately determined using a photomask.

In the interference filter according to the aspect of the invention, it is preferable that the metal layer is formed of Au, Al, Ag, Cu, or an alloy thereof.

In the interference filter with this configuration, since Au, Al, Ag, Cu, or an alloy thereof that has high flexibility (large plasticity) is used as a metal layer, the metal layer can also be bent according to the bending of the base layer. Accordingly, when applying a load, the unevenness of the metal layer surface can be easily absorbed by the base layer. As a result, it is possible to improve the accuracy of surface contact between the metal layers. In addition, since the softening temperature is low, the metal layers can be easily bonded to each other even when heat pressing is used.

Still another aspect of the invention is directed to an interference filter manufacturing method including: forming a first substrate and providing a first reflective film, which reflects a part of incident light and transmits a remaining part of the incident light, on the first substrate; forming a second substrate and providing a second reflective film, which reflects a part of incident light and transmits a remaining part of the incident light, on the second substrate; forming a first base layer on one of the first and second substrates; forming a first metal layer, which has smaller plasticity than the first base layer and covers the first base layer, on one of the first and second substrates and forming a second metal layer, which is bonded to the first metal layer, on the other one of the first and second substrates; and bonding the first and second metal layers to each other to seal a first internal space formed between the first and second substrates.

In this interference filter manufacturing method, when bonding the first and second substrates formed by the first and second substrate forming steps to each other, the first base layer is first formed on one of the first and second substrates by the base layer forming step, and then the first metal layer having smaller plasticity than the first base layer is formed so as to cover the first base layer by the metal layer forming step. In addition, in the metal layer forming step, the second metal layer is formed on the other substrate, on which the first metal layer is not formed, of the first and second substrates. Then, in the bonding step, the first and second metal layers are made to be in contact with each other for metal bonding therebetween. In such a manufacturing method, similar to the above, since metal bonding using the first and second metal layers is performed, it is possible to perform highly airtight metal bonding. In addition, the first base layer is provided below the first metal layer. Accordingly, even if the surface accuracy becomes worse due to processing, such as etching, performed on the substrate in the first substrate forming step or the second substrate forming step, the minute unevenness of the surface of the first or second metal layer can be absorbed since the first base layer can serve as a cushion at the time of bonding. Therefore, the surface contact between the metal layers can be realized.

In this manner, it is possible to bond the first and second substrates to each other with high airtightness and to improve the bonding yield.

In the interference filter manufacturing method according to the aspect of the invention, it is preferable that in the forming of the base layer, a second base layer having larger plasticity than the second metal layer is formed on the other one of the first and second substrates. Preferably, in the forming of the metal layer, the second metal layer is formed so as to cover the second base layer.

In the interference filter manufacturing method with this configuration, the second base layer is formed by the base layer forming step, and the second metal layer is formed so as to cover the second base layer in the metal layer forming step. For this reason, since not only the first base layer but also the second base layer serves as a cushion, minute unevenness occurring on the surfaces of the first and second metal layers can be more accurately absorbed. As a result, it is possible to improve the adhesion between the metal layers. Therefore, it is possible to further improve the bonding yield and the airtightness in the first bonding portion.

In the interference filter manufacturing method according to the aspect of the invention, it is preferable the method further includes forming a third substrate disposed on a side of a surface of the first substrate not facing the second substrate, and , in the forming of the base layer, a third base layer is formed on one of the first and third substrates, in the forming of the metal layer, a third metal layer that has smaller plasticity than the third base layer and covers the third base layer is formed on one of the first and third substrates, and a fourth metal layer bonded to the third metal layer is provided on the other one of the first and third substrates, and, in the bonding of the metal layers, the third and fourth metal layers are bonded to each other to seal a second internal space formed between the first and third substrates.

In the interference filter manufacturing method with this configuration, in the third substrate forming step, the third substrate bonded to the second surface of the first substrate is formed, and the first and third substrates are bonded to each other. In this case, similar to the above, the third base layer is formed on one of the first and third substrates, and the third metal layer that covers the third base layer is formed. In addition, the fourth metal layer is formed on the other substrate, and the third and fourth metal layers are metal-bonded to each other.

Thus, in the same manner as in the bonding between the first and second substrates, in the bonding between the first and third substrates, it is also possible to improve both of the bonding yield and the airtightness.

In the interference filter manufacturing method according to the aspect of the invention, it is preferable that, in the forming of the base layer, a fourth base layer having larger plasticity than the fourth metal layer is formed on the other one of the first and third substrates, and, in the forming of the metal layer, the fourth metal layer is formed so as to cover the fourth base layer.

In the interference filter manufacturing method with this configuration, the fourth base layer is formed in the base layer forming step, and the fourth metal layer is formed so as to cover the fourth base layer in the metal layer forming step. Therefore, since not only the third base layer but also the fourth base layer serves as a cushion, minute unevenness occurring on the surfaces of the third and fourth metal layers can be more accurately absorbed. As a result, it is possible to improve the adhesion between the metal layers.

In the interference filter manufacturing method according to the aspect of the invention, it is preferable that, in the bonding of the metal layers, activated bonding between the metal layers is performed by pressure after performing activation processing on surfaces of the metal layers.

In the interference filter manufacturing method with this configuration, in the bonding of the metal layers, the surfaces of the metal layers can be activated so that the metal layers are easily bonded to each other by performing activation processing on the surfaces of the metal layers (first to fourth metal layers) . By pressing the metal layers against each other in this activated state, the bonding portions of the activated metal layer surfaces can be easily bonded to each other. As a result, it is possible to improve the adhesion between the metal layers and improve the bonding yield or the airtightness.

In the interference filter manufacturing method according to the aspect of the invention, it is preferable that the activation processing in the bonding of the metal layers is plasma treatment using inert gas.

In the interference filter manufacturing method with this configuration, plasma treatment using inert gas is performed as the above activation processing. By using inert gas as described above, even when a reflective film that easily deteriorates, such as Ag or an Ag alloy, is used as the first or second reflective film, it is possible to suppress the deterioration of the reflective film.

In the interference filter manufacturing method according to the aspect of the invention, it is preferable that, in the bonding of the metal layers, the metal layers are pressed while being heated up to a bonding temperature lower than a temperature at which the first and second reflective films deteriorate.

In the interference filter manufacturing method with this configuration, the metal layers are bonded to each other by heat pressing. Since the metal layers can be closely bonded to each other in a softened state, it is possible to improve the airtightness. In addition, since the bonding temperature at which the reflective film is not deteriorated is set as the heating temperature in this case, it is possible to suppress the thermal deterioration of the reflective film.

In the interference filter manufacturing method according to the aspect of the invention, it is preferable that, in the forming of the base layer, the base layer is formed after performing plasma treatment on a surface of a base material provided below the base layer.

In the interference filter manufacturing method with this configuration, plasma treatment is performed on the surface of the base material provided below the base layer in the base layer forming step (step of forming the first to fourth base layers). Although first to third substrates can be exemplified as the lower layer, it is also possible to form a base layer on each of these base materials with another layer interposed therebetween. In this case, another layer becomes a base material provided below the base layer. According to the aspect of the invention, it is possible to improve the adhesion to the base material of the base layer.

In the interference filter manufacturing method according to the aspect of the invention, it is preferable that, in the bonding of the metal layer, the metal layer is formed after performing plasma treatment on a surface of a base material provided below the metal layer.

In the interference filter manufacturing method with this configuration, plasma treatment is performed on the surface of the base material provided below the metal layer in the metal layer forming step (step of forming the first to fourth base layers). In the case of the first and third metal layers, plasma treatment is performed on the surfaces of the first and second base layers covered by the first and third metal layers and the surfaces of the substrates on which these base layers are provided. In addition, for example, another layer formed of a material, such as Cr, to improve the adhesion between metal layers may be interposed between the metal layer and the base layer. In this case, since another layer becomes a base material, plasma treatment is performed on the surface of another layer.

In addition, each of the second and fourth metal layers may be directly formed on the substrate (first, second, or third substrate). In this case, plasma treatment is performed on the substrate surface. In addition, when the second and fourth metal layers are provided on the second and fourth base layers, respectively, plasma treatment is performed on the surfaces of the base layers and the surfaces of the substrates. In addition, another layer may be interposed between the metal layer and the substrate or between the metal layer and the base layer. In this case, since another layer becomes a base material, plasma treatment is performed on the surface of another layer.

According to the aspect of the invention, since plasma treatment is performed on the surface of the base material that forms the metal layer, it is possible to improve the adhesion between the metal layers.

Yet another aspect of the invention is directed to an optical module including: a first substrate; a second substrate disposed so as to face the first substrate; a first reflective film that is provided on a surface of the first substrate facing the second substrate and that reflects a part of incident light and transmits a remaining part of the incident light; a second reflective film that faces the first reflective film with a gap interposed therebetween and that reflects a part of incident light and transmits a remaining part of the incident light; a first bonding portion that bonds the first and second substrates to each other to seal a first internal space formed between the first and second substrates; and a light receiving unit that receives light having a wavelength selected by interference of light beams incident between the first and second reflective films. The first bonding portion includes a first base layer provided on one of the first and second substrates, a first metal layer that is provided on the substrate, on which the first base layer is provided, so as to cover the first base layer and that has smaller plasticity than the first base layer, and a second metal layer that is provided on the other one of the first and second substrates and that is bonded to the first metal layer.

In this optical module, as described above, the first and second substrates are bonded to each other with high airtightness. Accordingly, since it is possible to prevent the penetration of harmful particles (for example, water molecules and the like leading to the deterioration of the reflective film) into the first internal space, it is possible to increase the spectral accuracy of the interference filter. Therefore, by receiving light transmitted through or reflected by the interference filter using the light receiving unit, it is possible to perform spectroscopic measurement with high accuracy. In addition, when the third substrate is bonded to the first substrate in a state where the second internal space is interposed therebetween and the first and second internal spaces are maintained in a decompressed state, it is possible to improve the responsiveness when changing the size of the gap between the reflective films. Therefore, spectroscopic measurement can be quickly performed by the optical module.

Still yet another aspect of the invention is directed to an electronic apparatus including: an interference filter including a first substrate, a second substrate disposed so as to face the first substrate, a first reflective film that is provided on a surface of the first substrate facing the second substrate and that reflects a part of incident light and transmits a remaining part of the incident light, a second reflective film that faces the first reflective film with a gap interposed therebetween and that reflects a part of incident light and transmits a remaining part of the incident light, and a first bonding portion that bonds the first and second substrates to each other to seal a first internal space formed between the first and second substrates; and a control unit that controls the interference filter. The first bonding portion includes a first base layer provided on one of the first and second substrates, a first metal layer that is provided on the substrate, on which the first base layer is provided, so as to cover the first base layer and that has smaller plasticity than the first base layer, and a second metal layer that is provided on the other one of the first and second substrates and that is bonded to the first metal layer.

In this electronic apparatus, as described above, the first and second substrates are bonded to each other with high airtightness. Accordingly, since it is possible to prevent the penetration of harmful particles (for example, water molecules and the like leading to the deterioration of the reflective film) into the first internal space, it is possible to increase the spectral accuracy of the interference filter. Accordingly, also in an electronic apparatus that performs predetermined electrical processing on the basis of light extracted (transmitted or reflected) by the interference filter, high-accuracy light can be accurately extracted from the interference filter. Therefore, it is possible to improve the processing system. In addition, when the third substrate is bonded to the first substrate with the second internal space interposed therebetween and the first and second internal spaces are maintained in a decompressed state, it is possible to improve the responsiveness when changing the size of the gap between the reflective films. Therefore, it is possible to perform processing in the electronic apparatus at high speed.

Further another aspect of the invention is directed to a bonded substrate including: a pair of substrates; a bonding portion that bonds the pair of substrates to each other to seal an internal space formed between the pair of substrates; and a device housed in the internal space. The bonding portion includes a base layer provided on one of the pair of substrates, a first metal layer that is provided on the substrate, on which the base layer is provided, so as to cover the base layer and that has smaller plasticity than the base layer, and a second metal layer that is provided on the other one of the pair of substrates and that is bonded to the first metal layer.

In this bonded substrate, a pair of substrates are bonded to each other to seal the internal space between these substrates in an airtight manner. In this case, in the bonding portion, the base layer is provided on one of the pair of substrates, the first metal layer is provided so as to cover the base layer, and the first metal layer and the second metal layer provided on the other substrate are bonded to each other. In such a configuration, similar to the above, even if the surface accuracy of the first or second metal layer is low at the time of bonding, the influence of minute unevenness of each metal layer surface can be suppressed since the base layer serves as a cushion. As a result, the metal layers can be made to be in contact with each other satisfactorily. Therefore, it is possible to bond the substrates to each other with high airtightness.

### BRIEF DESCRIPTION OF THE DRAWINGS

The invention will be described with reference to the accompanying drawings, wherein like numbers reference like elements.
Fig. 1 is a block diagram showing the schematic configuration of a spectrometer of a first embodiment of the invention.
Fig. 2 is a plan view of a wavelength tunable interference filter of the first embodiment.
Fig. 3 is a cross-sectional view of the wavelength tunable interference filter of the first embodiment.
Fig. 4 is a plan view of a fixed substrate of the wavelength tunable interference filter of the first embodiment.
Fig. 5 is a plan view of a movable substrate of the wavelength tunable interference filter of the first embodiment.
Fig. 6 is a cross-sectional view when a part of the wavelength tunable interference filter of the first embodiment is cut.
Fig. 7 is a flowchart showing a method of manufacturing the wavelength tunable interference filter of the first embodiment.
Figs. 8A to 8D are diagrams showing a fixed substrate forming step in the method of manufacturing the wavelength tunable interference filter of the first embodiment.
Figs. 9A to 9D are diagrams showing a movable substrate forming step in the method of manufacturing the wavelength tunable interference filter of the first embodiment.
Figs. 10A to 10C are diagrams showing a base layer forming step, a metal layer forming step, and a bonding step in the method of manufacturing the wavelength tunable interference filter of the first embodiment.
Fig. 11 is a cross-sectional view showing a wavelength tunable interference filter in a modification example of the first embodiment.
Fig. 12 is a diagram showing an example of a first bonding portion of the second embodiment.
Fig. 13 is a cross-sectional view showing the schematic configuration of a wavelength tunable interference filter according to another embodiment of the invention.
Fig. 14 is a block diagram showing the schematic configuration of a color measuring apparatus, which is an example of an electronic apparatus, in still another embodiment.
Fig. 15 is a diagram showing the schematic configuration of a gas detector, which is an example of an electronic apparatus, in still another embodiment.
Fig. 16 is a block diagram showing the system configuration of the gas detector shown in Fig. 15.
Fig. 17 is a block diagram showing the schematic configuration of a food analyzer, which is an example of an electronic apparatus, in still another embodiment.
Fig. 18 is a block diagram showing the schematic configuration of a spectral camera, which is an example of an electronic apparatus, in still another embodiment.
Fig. 19 is a cross-sectional view showing the schematic configuration of a pressure sensor, which is an example of a bonded substrate, in still another embodiment.

### DESCRIPTION OF EXEMPLARY EMBODIMENTS

### First embodiment

Hereinafter, a first embodiment of the invention will be described with reference to the accompanying diagrams.

### Configuration of a spectrometer

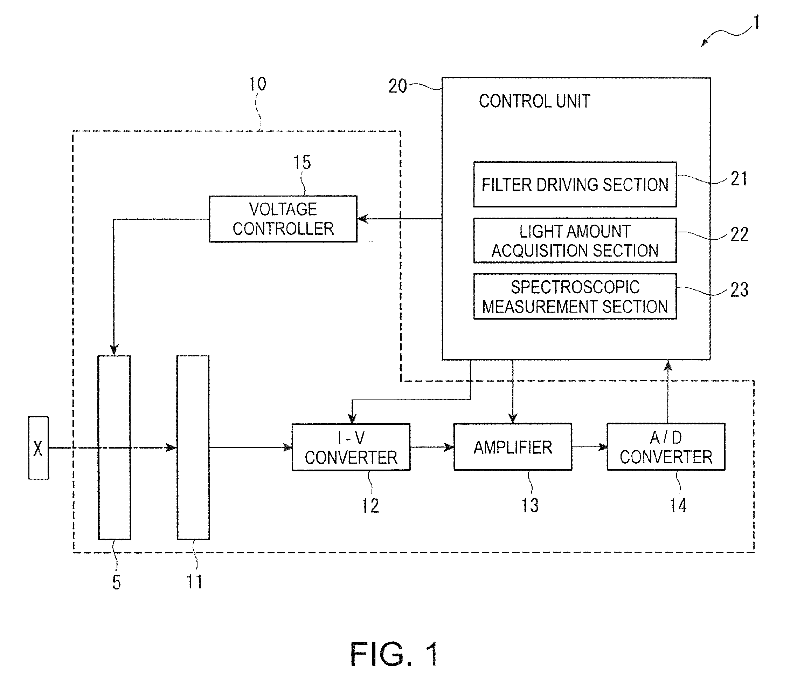

Fig. 1 is a block diagram showing the schematic configuration of a spectrometer according to the first embodiment of the invention.

A spectrometer 1 is an example of an electronic apparatus according to the invention, and is an apparatus that analyzes the light intensity of each wavelength in measurement target light reflected by a measurement target X and measures the spectrum. In the present embodiment, an example is shown in which the measurement target light reflected by the measurement target X is measured. However, for example, when a light emitter such as a liquid crystal panel is used as the measurement target X, light emitted from the light emitter may be used as the measurement target light.

As shown in Fig. 1, the spectrometer 1 includes an optical module 10 and a control unit 20 that processes a signal output from the optical module 10.

### Configuration of an optical module

The optical module 10 is configured to include a wavelength tunable interference filter 5, a detector 11, an I-V converter 12, an amplifier 13, an A/D converter 14, and a voltage controller 15.

In the optical module 10, measurement target light reflected by the measurement target X is guided to the wavelength tunable interference filter 5 through an incidence optical system (not shown), and light transmitted through the wavelength tunable interference filter 5 is received by the detector 11. Then, a detection signal output from the detector 11 is output to the control unit 20 through the I-V converter 12, the amplifier 13, and the A/D converter 14.

### Configuration of a wavelength tunable interference filter

Next, the wavelength tunable interference filter 5 (interference filter in the invention) built into the optical module 10 will be described.

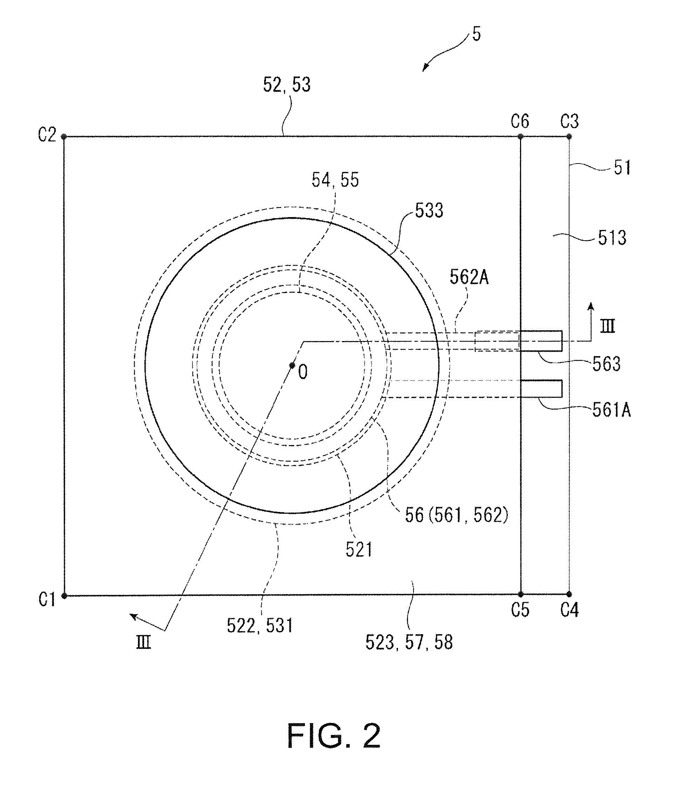

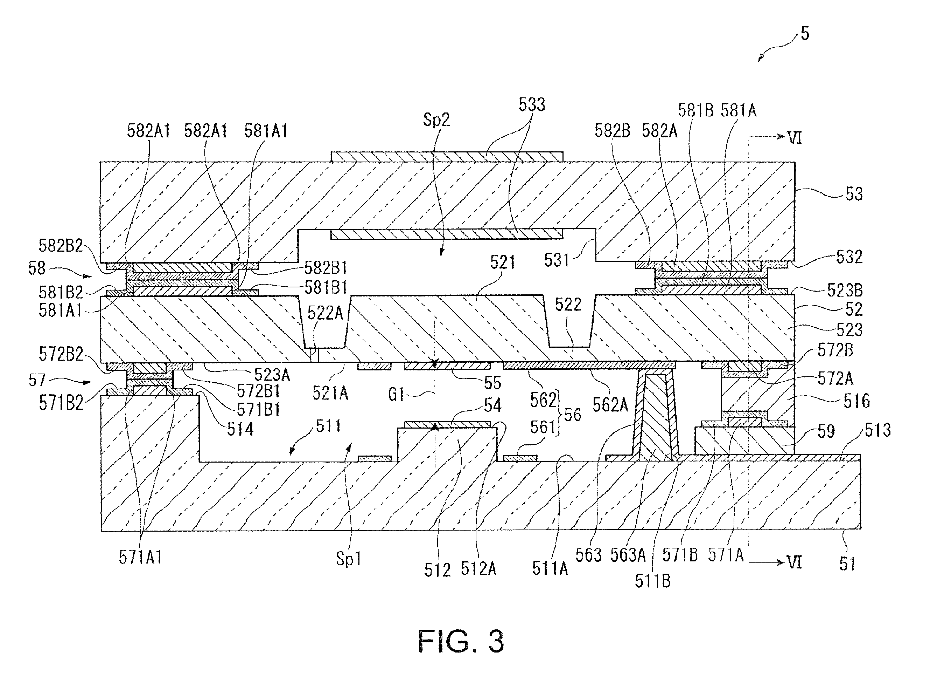

Fig. 2 is a plan view showing the schematic configuration of the wavelength tunable interference filter 5. Fig. 3 is a cross-sectional view taken along the III-III line in Fig. 2.

As shown in Figs. 2 and 3, the wavelength tunable interference filter 5 includes a fixed substrate 51 equivalent to a second substrate according to the invention, a movable substrate 52 equivalent to a first substrate according to the invention, and a cover substrate 53 equivalent to a third substrate according to the invention. These substrates 51, 52, and 53 are formed of, for example, various kinds of glass, such as soda glass, crystalline glass, quartz glass, lead glass, potassium glass, borosilicate glass, and alkali-free glass, quartz, and the like. In addition, the fixed substrate 51 and the movable substrate 52 are bonded to each other by a first bonding portion 57, and the movable substrate 52 and the cover substrate 53 are bonded to each other by a second bonding portion 58. The configuration of the first and second bonding portion 57 and 58 will be described in detail later.

A fixed reflective film 54 that forms a second reflective film according to the invention is provided on a surface of the fixed substrate 51 facing the movable substrate 52, and a movable reflective film 55 that forms a first reflective film according to the invention is provided on a movable surface of the movable substrate 52 facing the fixed substrate 51. The fixed reflective film 54 and the movable reflective film 55 are disposed with a gap G1 interposed therebetween. In addition, in plan view when the fixed substrate 51 and the movable substrate 52 are viewed from the thickness direction, a light interference region is formed by a region where the fixed reflective film 54 and the movable reflective film 55 overlap each other.

An electrostatic actuator 56, which is an example of a gap change portion according to the invention used to adjust (change) the size of the gap G1, is provided in the wavelength tunable interference filter 5. The electrostatic actuator 56 can change the size of the gap G1 easily by electrostatic attraction by applying a predetermined voltage between electrodes facing each other. Therefore, it is possible to simplify the configuration. The electrostatic actuator 56 can be driven by the control of the voltage controller 15.

In addition, in the following explanation, a plan view when viewed from the thickness direction of each of the substrates 51, 52, and 53, that is, a plan view when the wavelength tunable interference filter 5 is viewed from the lamination direction of the fixed substrate 51, the movable substrate 52, and the cover substrate 53 is referred to as a filter plan view. In addition, in the present embodiment, in filter plan view, the center point of the fixed reflective film 54 and the center point of the movable reflective film 55 match each other, and the center point of each of these reflective films in plan view is referred to as a filter center point O and the straight line passing through the center point of each of these reflective films is referred to as a center axis.

### Configuration of a fixed substrate

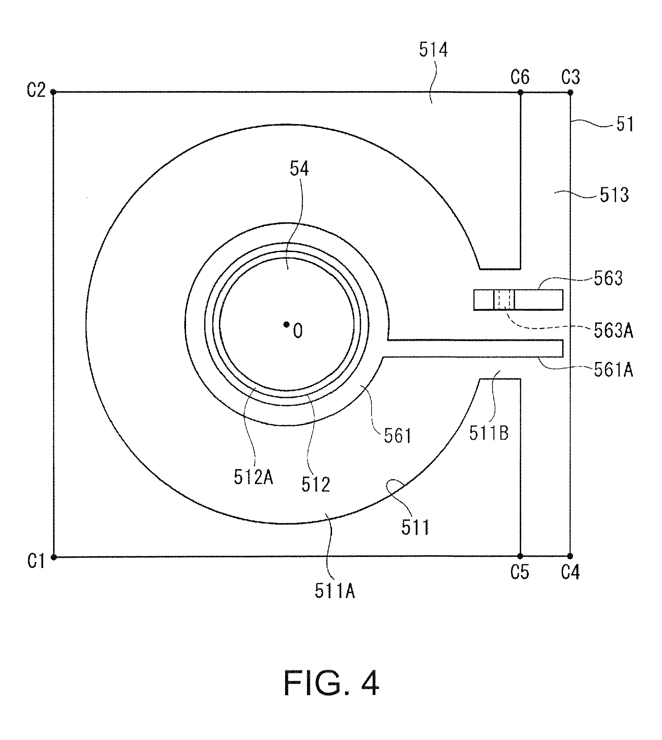

Fig. 4 is a plan view when the fixed substrate 51 of the present embodiment is viewed from the movable substrate 52 side.

Since the fixed substrate 51 is formed in a larger thickness than the movable substrate 52, there is no bending of the fixed substrate 51 due to electrostatic attraction of the electrostatic actuator 56 or the internal stress of a film member (for example, the fixed reflective film 54) formed on the fixed substrate 51.

As shown in Figs. 3 and 4, the fixed substrate 51 includes an electrode arrangement groove 511 and a reflective film arrangement portion 512 formed by etching, for example. In addition, one end (side C3 - C4) of the fixed substrate 51 protrudes outward from the outer peripheral edge (side C5 - C6) of the movable substrate 52 and the cover substrate 53 in filter plan view, and a terminal portion 513 is formed by the protruding portion.

The electrode arrangement groove 511 is formed in an annular shape, which has the filter center point O of the fixed substrate 51 as the center, in filter plan view. The reflective film arrangement portion 512 is formed so as to protrude from the center of the electrode arrangement groove 511 to the movable substrate 52 side in filter plan view. The groove bottom surface of the electrode arrangement groove 511 becomes an electrode arrangement surface 511A on which the fixed electrode 561 of the electrostatic actuator 56 is disposed. In addition, the protruding distal surface of the reflective film arrangement portion 512 becomes a reflective film arrangement surface 512A on which the fixed reflective film 54 is disposed.

In addition, an electrode extraction groove 511B extending from the electrode arrangement groove 511 toward the outer peripheral edge of the fixed substrate 51 is provided on the fixed substrate 51. Specifically, the electrode extraction groove 511B extends from the electrode arrangement groove 511 to the terminal portion 513 of the side C3 - C4 of the fixed substrate 51. In addition, the terminal portion 513 is formed at the same height (on the same plane) as the electrode arrangement groove 511 or the electrode extraction groove 511B.

A fixed electrode 561 of the electrostatic actuator 56 is provided on the electrode arrangement surface 511A of the electrode arrangement groove 511. The fixed electrode 561 may be directly provided on the electrode arrangement surface 511A, or may be provided on another thin film (layer) provided on the electrode arrangement surface 511A.

The fixed electrode 561 is formed in an approximately annular shape. Preferably, the fixed electrode 561 is formed in an annular shape. The approximately annular shape referred to herein also includes a shape having a notched portion in part, such as a C shape, for example. In addition, in the present embodiment, an example is shown in which one fixed electrode 561 is provided. However, for example, a configuration may be adopted in which a plurality of annular electrodes are concentrically disposed and the plurality of electrodes are provided independently (are insulated from each other).

In addition, a fixed extraction electrode 561A is connected to the fixed electrode 561. The fixed extraction electrode 561A is pulled out to the terminal portion 513 along the electrode extraction groove 511B, and is connected to the voltage controller 15, for example, by wire bonding or FPC, in the terminal portion 513.

As examples of the material for forming the fixed electrode 561 and the fixed extraction electrode 561A, an Au/Cr film and an indium tin oxide (ITO) are mentioned.

In addition, an insulating layer may be formed on the surface of the fixed electrode 561.

In addition, a bump electrode 563, which is obtained by forming resin, such as polyimide, as a core 563A and plating a region around the core with Au or the like, is formed in the electrode extraction groove 511B. The bump electrode 563 is pulled out to the terminal portion 513 along the electrode extraction groove 511B. The bump electrode 563 is connected to the voltage controller 15, for example, by wire bonding or FPC. In addition, the bump electrode 563 and the fixed extraction electrode 561A are insulated from each other without being in contact with each other.

As described above, the reflective film arrangement portion 512 is formed in an approximately cylindrical shape, which has a smaller diameter than the electrode arrangement groove 511, on the same axis as the electrode arrangement groove 511, and includes the reflective film arrangement surface 512A facing the movable substrate 52.

The fixed reflective film 54 is provided on the reflective film arrangement portion 512.

The fixed reflective film 54 may be directly provided on the reflective film arrangement portion 512, or may be provided on another thin film (layer) provided on the reflective film arrangement portion 512. As examples of the fixed reflective film 54, it is possible to use a metal film formed of Ag and a conductive alloy film formed of Ag alloy. When using a metal film formed of Ag, it is preferable to form a protective film in order to suppress the deterioration of Ag.

In addition, for example, a dielectric multilayer film formed by alternately laminating TiO₂, which is a high refractive index layer, and SiO₂, which is a low refractive index layer, may be used. Alternatively, a reflective film formed by laminating a dielectric multilayer film and a metal film, a reflective film formed by laminating a dielectric monolayer film and an alloy film, and the like may be used.

In addition, on the light incidence surface (surface on which the fixed reflective film 54 is not provided) of the fixed substrate 51, an antireflection film may be formed at a position corresponding to the fixed reflective film 54. The antireflection film reduces the light reflectance on the surface of the fixed substrate 51, thereby increasing the transmittance.

In addition, in a surface of the fixed substrate 51 facing the movable substrate 52, a region other than the electrode arrangement groove 511, electrode extraction groove 511B, reflective film arrangement portion 512, and terminal portion 513 becomes a fixed side bonding target surface 514 on which the first bonding portion 57 to be described later is provided.

### Configuration of a movable substrate

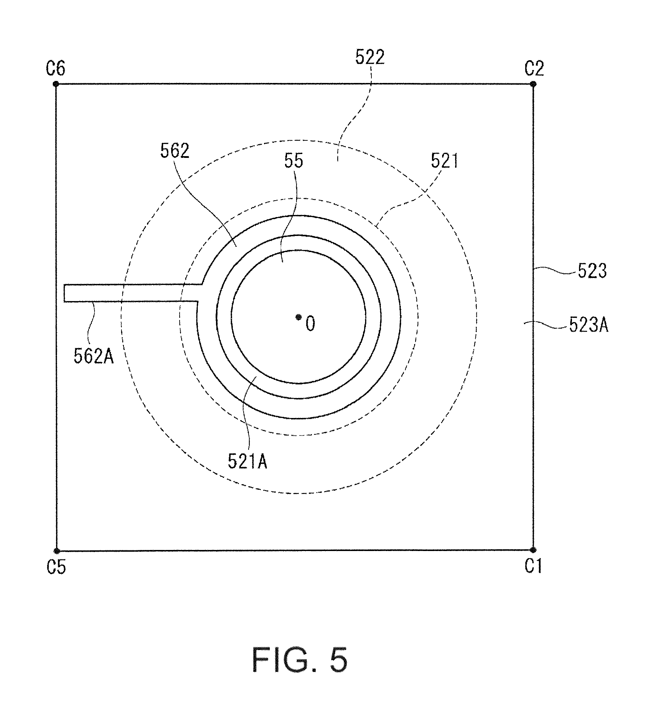

Fig. 5 is a plan view when the movable substrate 52 in the wavelength tunable interference filter of the present embodiment is viewed from the fixed substrate 51 side.

As shown in Figs. 2, 4, and 5, the movable substrate 52 includes a movable portion 521 having a circular shape with the filter center point O as the center in filter plan view, a holding portion 522 that is coaxial with the movable portion 521 and holds the movable portion 521, and a substrate outer peripheral portion 523 provided outside the holding portion 522.

The movable portion 521 is formed in a larger thickness than the holding portion 522. In the present embodiment, for example, the movable portion 521 is formed in the same thickness as the movable substrate 52 (substrate outer peripheral portion 523). The movable portion 521 is formed so as to have a larger diameter than at least the diameter of the outer peripheral edge of the reflective film arrangement surface 512A in filter plan view. In addition, a movable electrode 562, which forms the electrostatic actuator 56, and the movable reflective film 55 are provided on the movable portion 521. The movable electrode 562 and the movable reflective film 55 may be directly provided on a movable surface 521A of the movable portion 521 facing the fixed substrate 51, or may be provided on another thin film (layer) provided on the movable surface 521A.

Similar to the fixed electrode 561, the movable electrode 562 is formed in an approximately annular shape. Preferably, the movable electrode 562 is formed in an annular shape with the filter center point O as the center. In addition, similar to the fixed electrode 561, the movable electrode 562 may be formed in a shape in which a part of the circular ring is notched, for example, in a C shape. Alternatively, the movable electrode 562 may be formed by a plurality of annular electrodes.

In addition, a movable extraction electrode 562A is connected to the movable electrode 562. The movable extraction electrode 562A is pulled out to the outer peripheral edge of the movable substrate 52 along a region facing the electrode extraction groove 511B. More specifically, the movable extraction electrode 562A is provided so as to face the bump electrode 563, and is in contact with the bump electrode 563 on the core 563A. Accordingly, the movable electrode 562 is connected to the voltage controller 15 through the bump electrode 563.

As examples of the material for forming the movable electrode 562 and the movable extraction electrode 562A, an Au/Cr film and indium tin oxide (ITO) can be used similar to the fixed electrode 561.

The movable reflective film 55 is provided in the center of the movable surface 521A of the movable portion 521 so as to face the fixed reflective film 54 with the gap G1 interposed therebetween. As the movable reflective film 55, a reflective film having the same configuration as the fixed reflective film 54 described above is used.

In addition, although an example in which the gap between the electrodes 561 and 562 is larger than the gap G1 between the reflective films 54 and 55 is shown in the present embodiment, the invention is not limited to thereto. For example, when infrared light or far-infrared light is used as the measurement target light, the gap G1 may be larger than the gap between the electrodes 561 and 562 depending on the wavelength range of the measurement target light.

The holding portion 522 is a diaphragm surrounding the periphery of the movable portion 521, and is formed in a smaller thickness than the movable portion 521. The holding portion 522 bends more easily than the movable portion 521 does. Accordingly, it is possible to displace the movable portion 521 to the fixed substrate 51 side by slight electrostatic attraction. In this case, since the movable portion 521 has larger thickness and rigidity than the holding portion 522, a change in the shape of the movable portion 521 can be suppressed to some extent even if the movable portion 521 is pulled to the fixed substrate 51 side due to electrostatic attraction.

In addition, a communication hole 522A is provided in a part of the holding portion 522. The communication hole 522A makes first internal space Sp1 provided between the fixed substrate 51 and the movable substrate 52 (space where the reflective films 54 and 55 and the electrostatic actuator 56 are disposed) and second internal space Sp2, which is provided between the movable substrate 52 and the cover substrate 53, communicate with each other. In the present embodiment, airtight sealing of the first internal space Sp1 and the second internal space Sp2 is performed, so that the internal space Sp1 and Sp2 is maintained at atmospheric pressure (for example, vacuum) decompressed from the atmosphere.

In addition, although the diaphragm-like holding portion 522 is illustrated in the present embodiment, the invention is not limited thereto. For example, beam-shaped holding portions, which are disposed at equal angular intervals with the filter center point O of the movable portion 521 as the center, may also be provided.

The substrate outer peripheral portion 523 is a portion provided on the outer side than the holding portion 522 in filter plan view. A surface of the substrate outer peripheral portion 523 facing the fixed substrate 51 is a first movable side bonding target surface 523A that is a first surface according to the invention. In addition, a surface of the substrate outer peripheral portion 523 facing the cover substrate 53 is a second movable side bonding target surface 523B that is a second surface according to the invention.

### Configuration of a cover substrate

Similar to the fixed substrate 51 and the movable substrate 52, the cover substrate 53 is formed by processing a glass substrate by etching. Specifically, a gap forming groove 531 facing the movable portion 521 and the holding portion 522 of the movable substrate 52 is formed in the cover substrate 53. In addition, on both surfaces of the cover substrate 53, an optical film 533 (band pass filter) that reflects or absorbs light having a wavelength outside a specific range is formed concentrically with the fixed reflective film 54 and the movable reflective film 55. In addition, the optical film 533 may also be provided on only one surface of the cover substrate 53. In addition, the optical film 533 is selected according to the target wavelength to perform spectroscopic measurement by the spectrometer 1. For example, in the spectrometer 1 that performs spectroscopic measurement, for example, in a visible light region, the optical film 533 that blocks light in an infrared range and an ultraviolet range is provided. In this case, infrared light may be blocked by one of the two optical films 533, and ultraviolet light may be blocked by the other optical film 533.

In addition, in the surface of the cover substrate 53 facing the movable substrate 52, a region where the gap forming groove 531 is not provided is a cover side bonding target surface 532.

### Configuration of first and second bonding portions

Next, the first bonding portion 57 to bond the fixed substrate 51 and the movable substrate 52 to each other will be described.

As shown in Fig. 3, the first bonding portion 57 includes a resin layer 571A and a metal layer 571B, which are provided on the fixed side bonding target surface 514 of the fixed substrate 51, and a resin layer 572A and a metal layer 572B, which are provided on the first movable side bonding target surface 523A of the movable substrate 52. In addition, surfaces of the metal layers 571B and 572B are metal-bonded to each other by surface contact, and accordingly, the fixed substrate 51 and the movable substrate 52 are bonded to each other.

The resin layers 571A and 572A form first and second base layers in the invention, respectively, and the metal layers 571B and 572B form first and second metal layers in the invention, respectively.

The resin layers 571A and 572A and the metal layers 571B and 572B are formed in annular shapes so as to surround the first internal space Sp1 of the wavelength tunable interference filter 5 in filter plan view.

In addition, the metal layer 571B is provided on the fixed side bonding target surface 514 of the fixed substrate 51 so as to cover the resin layer 571A. That is, as shown in Fig. 3, an edge 571A1 of the resin layer 571A is completely covered by the metal layer 571B. Accordingly, the surface of the resin layer 571A is not exposed to the outside of the wavelength tunable interference filter 5. In addition, an inner peripheral edge 571B1 and an outer peripheral edge 571B2 of the metal layer 571B are in close contact with the fixed side bonding target surface 514.

This is the same as for the metal layer 572B. On the first movable side bonding target surface 523A, an edge 572A1 of the resin layer 572A is completely covered by the metal layer 572B, and an inner peripheral edge 572B1 and an outer peripheral edge 572B2 of the metal layer 572B are in close contact with the first movable side bonding target surface 523A.

In addition, the resin layers 571A and 572A and the metal layers 571B and 572B may be directly formed on the fixed substrate 51 or the movable substrate 52, or may be formed with another layer, such as an adhesive layer, interposed therebetween.

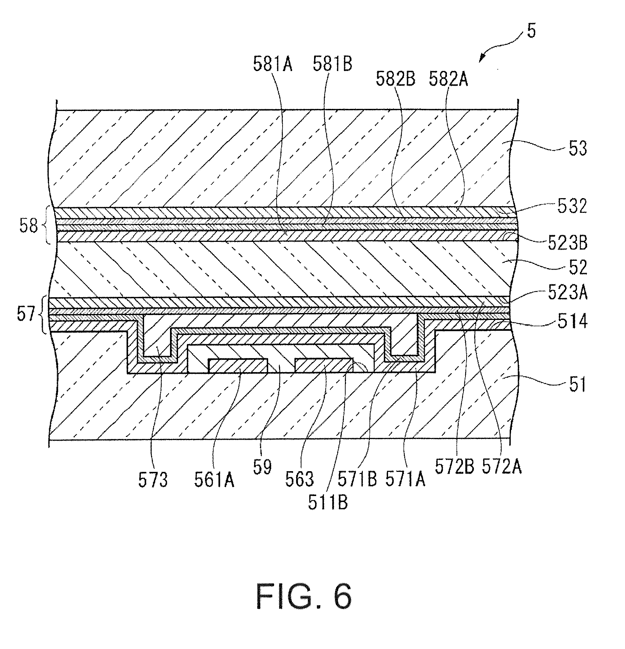

Fig. 6 is a cross-sectional view taken along the VI-VI line in Fig. 3.

Incidentally, in a portion of the fixed substrate 51 where the electrode extraction groove 511B is formed, since a distance between the fixed substrate 51 and the movable substrate 52 is larger than a distance between the fixed side bonding target surface 514 and the first movable side bonding target surface 523A, the metal layers 571B and 572B are not in contact with each other. In the present embodiment, therefore, airtightness is ensured in this region by the configuration shown in Fig. 6.

That is, in the electrode extraction groove 511B, an insulating layer 59 is provided so as to cover the fixed extraction electrode 561A and the bump electrode 563. In addition, the insulating layer 59 is not provided in a portion where the core 563A of the bump electrode 563 is provided since the portion needs to be electrically connected to the movable extraction electrode 562A.

In addition, as shown in Figs. 3 and 6, the resin layers 571A and 572A and the metal layers 571B and 572B that form the first bonding portion 57 are provided on the terminal portion 513 side rather than the position of the electrode extraction groove 511B where the inner core 563A is provided. Here, the resin layer 571A and the metal layer 571B are provided on the insulating layer 59, as shown in Figs. 3 and 6.

In addition, by sealing a region between the metal layers 571B and 572B with a sealing material 573, the first internal space Sp1 is sealed. As examples of the sealing material 573, an adhesive, low-melting-point glass, low-melting-point metal, and the like are used. In particular, the low-melting-point metal with small outgassing and high airtightness is preferable.

The second bonding portion 58 bonds the movable substrate 52 and the cover substrate 53 to each other by the same configuration as the first bonding portion 57 described above.

As shown in Fig. 3, the second bonding portion 58 includes a resin layer 581A and a metal layer 581B, which are provided on the second movable side bonding target surface 523B of the movable substrate 52, and a resin layer 582A and a metal layer 582B, which are provided on the cover side bonding target surface 532 of the cover substrate 53. In addition, surfaces of the metal layers 581B and 582B are metal-bonded to each other by surface contact, and accordingly, the movable substrate 52 and the cover substrate 53 are bonded to each other.

The resin layers 581A and 582A form third and fourth base layers in the invention, respectively, and the metal layers 581B and 582B form third and fourth metal layers in the invention, respectively.

The resin layers 581A and 582A and the metal layers 581B and 582B are formed in annular shapes so as to surround the second internal space Sp2 of the wavelength tunable interference filter 5 in filter plan view.

In addition, similar to the metal layers 571B and 572B, the metal layer 581B is provided so as to cover the resin layer 581A. That is, as shown in Fig. 3, an edge 581A1 of the resin layer 581A is completely covered by the metal layer 581B. Accordingly, the surface of the resin layer 581A is not exposed to the outside of the wavelength tunable interference filter 5. In addition, an inner peripheral edge 581B1 and an outer peripheral edge 581B2 of the metal layer 581B are in close contact with the second movable side bonding target surface 523B.

This is the same as for the metal layer 582B. On the cover side bonding target surface 532, an edge 582A1 of the resin layer 582A is completely covered by the metal layer 582B, and an inner peripheral edge 582B1 and an outer peripheral edge 582B2 of the metal layer 582B are in close contact with the cover side bonding target surface 532.

In the bonding portions 57 and 58 described above, it is preferable that the metal layers 571B, 572B, 581B, and 582B be formed of Au (gold). Since the Au has relatively high flexibility (large plasticity) in the metal, bonding with high bonding strength and high airtightness becomes possible by metal bonding. In addition, as materials of the metal layer, it is also possible to use a metal, such as Al, Ag, or Cu, or an alloy thereof without being limited to Au.

In addition, for the resin layers 571A, 572A, 581A, and 582A, materials with larger plasticity than for the metal layers 571B, 572B, 581B, and 582B are used. In the present embodiment, the resin layers 571A and 572A are formed by the plasma polymerized film containing polyorganosiloxane as a main component. Such a plasma polymerized film can be easily patterned on the substrate surface using a metal mask. Therefore, it is possible to improve the manufacturing efficiency.

In addition, the resin layers may also be formed of, for example, an epoxy-based photosensitive material without being limited to the plasma polymerized film described above. When using the epoxy-based photosensitive material for the resin layer, patterning using a photomask is performed. In this case, the resin layer can be patterned with higher precision than in the case where a metal mask is used. Therefore, it is possible to improve the accuracy of the shape, position, and size of the resin layer.

In addition, although the resin layers 571A, 572A, 581A, and 582A are used as an example of each base layer in the present embodiment, any material that is more flexible than the material of the metal layer may be used. For example, since Au is used as the metal layers 571B, 572B, 581B, and 582B in the present embodiment, a metal with larger plasticity than Au may be used. As examples of such metal, Sn (tin), Pb (lead), Mg (magnesium), and the like can be mentioned. In addition, when using a metal other than Au as the metal layers 571B, 572B, 581B, and 582B, it is also possible to change the material of the base layer accordingly. For example, it is possible to use Pb as the base layer and Mg as the metal layer.

### Another configuration of an optical module

Next, referring back to Fig. 1, another configuration of the optical module 10 will be described.

The detector 11 receives (detects) light transmitted through the wavelength tunable interference filter 5 and outputs a detection signal based on the amount of received light to the I-V converter 12.

The I-V converter 12 converts the detection signal input from the detector 11 into a voltage value, and outputs the voltage to the amplifier 13.

The amplifier 13 amplifies a voltage (detection voltage) corresponding to the detection signal input from the I-V converter 12.

The A/D converter 14 converts the detection voltage (analog signal) input from the amplifier 13 into a digital signal, and outputs the digital signal to the control unit 20.

The voltage controller 15 applies a driving voltage to the electrostatic actuator 56 of the wavelength tunable interference filter 5 under the control of the control unit 20. Then, electrostatic attraction occurs between the fixed electrode 561 and the movable electrode 562 of the electrostatic actuator 56. As a result, the movable portion 521 is displaced to the fixed substrate 51 side.

### Configuration of a control unit

Next, the control unit 20 of the spectrometer 1 will be described.

The control unit 20 is configured to include, for example, a CPU, a memory, and the like, and controls the overall operation of the spectrometer 1. As shown in Fig. 1, the control unit 20 includes a filter driving section 21, a light amount acquisition section 22, and a spectroscopic measurement section 23. In addition, V-λ data showing the relationship between the wavelength of light transmitted through the wavelength tunable interference filter 5 and a driving voltage applied to the electrostatic actuator 56 corresponding to the wavelength is stored in the memory of the control unit 20.

The filter driving section 21 sets a desired wavelength of light extracted by the wavelength tunable interference filter 5, and outputs a command signal, which indicates the application of a driving voltage corresponding to the set desired wavelength to the electrostatic actuator 56, to the voltage controller 15 on the basis of the V-λ data.

The light amount acquisition section 22 acquires the amount of light having a desired wavelength, which has been transmitted through the wavelength tunable interference filter 5, on the basis of the amount of light acquired by the detector 11.

The spectroscopic measurement section 23 measures the spectral characteristics of the measurement target light on the basis of the amount of light acquired by the light amount acquisition section 22.

Method of manufacturing a wavelength tunable interference filter

Next, a method of manufacturing the wavelength tunable interference filter described above will be described with reference to the accompanying diagrams.

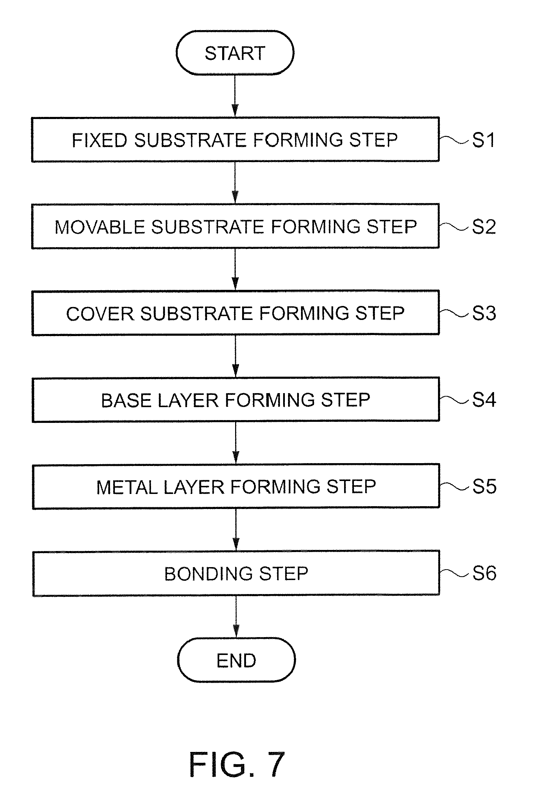

Fig. 7 is a flowchart showing a method of manufacturing a wavelength tunable interference filter.

In the manufacture of the wavelength tunable interference filter 5, first, a first glass substrate M1 for forming the fixed substrate 51 and a second glass substrate M2 for forming the movable substrate 52 are prepared, a third glass substrate M3 for forming the cover substrate 53 is prepared, and a fixed substrate forming step S1 (second substrate forming step), a movable substrate forming step S2 (first substrate forming step), and a cover substrate forming step S3 are performed. In addition, the order of the fixed substrate forming step S1, the movable substrate forming step S2, and the cover substrate forming step S3 may be changed. Then, the resin layers 571A, 572A, 581A, and 582A are formed by a base layer forming step S4, and then the metal layers 571B, 572B, 581B, and 582B are formed by a metal layer forming step S5. Then, a bonding step S6 is performed to bond the formed glass substrates M1, M2, and M3, and the wavelength tunable interference filter 5 is cut in units of a chip.

Hereinafter, each of the steps S1 to S5 will be described with reference to the accompanying diagrams.

### Fixed substrate forming step

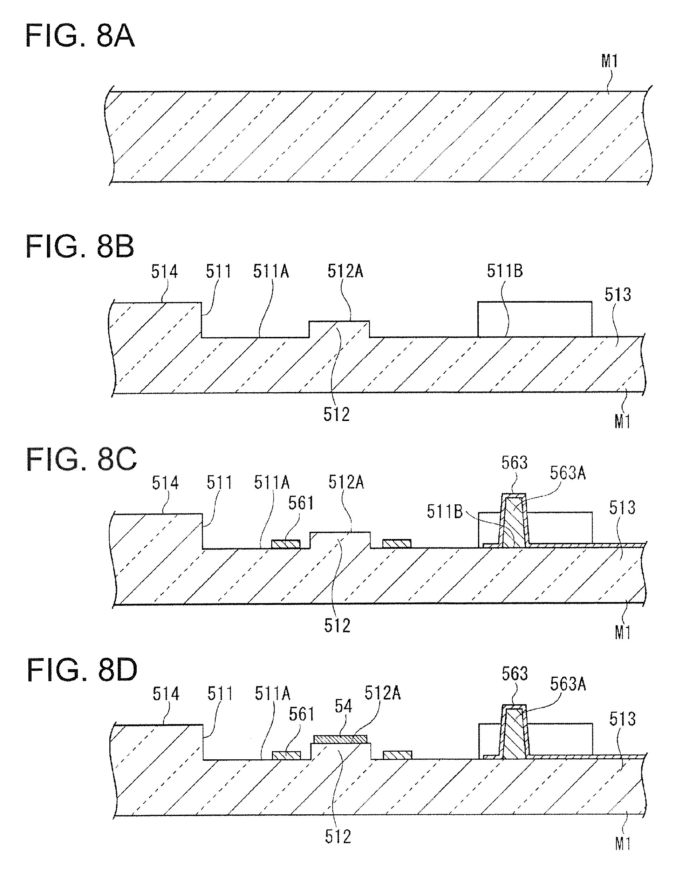

Figs. 8A to 8D are diagrams showing the state of the first glass substrate M1 in the fixed substrate forming step S1.

In the fixed substrate forming step S1, as shown in Fig. 8A, both surfaces of the first glass substrate M1 (for example, the thickness is 1 mm) that is a manufacturing material of the fixed substrate 51 are finely polished first until the surface roughness Ra becomes equal to or less than 1 nm.

Then, as shown in Fig. 8B, the surface of the first glass substrate M1 is processed by etching.

Specifically, for example, wet etching using hydrofluoric acid (BHF or the like) is repeatedly performed on the first glass substrate M1 using a resist pattern, which is patterned using a photolithography method, as a mask. First, the electrode arrangement groove 511, the electrode extraction groove 511B, the reflective film arrangement portion 512, and the terminal portion 513 are etched to the height position (for example, 0.5 µm) of the reflective film arrangement surface 512A. Then, the electrode arrangement groove 511, the electrode extraction groove 511B, and the terminal portion 513 are etched to the height position (for example, 1. 0 µm) of the electrode arrangement surface 511A.

In addition, a surface of the first glass substrate M1 that is not etched becomes the fixed side bonding target surface 514. In this manner, the first glass substrate M1 in which the shape of the fixed substrate 51 is determined is formed.

In the present embodiment, a plurality of fixed substrates 51 are formed from the single first glass substrate M1. Accordingly, in this step, the first glass substrate M1 is etched so that a plurality of fixed substrates 51 are manufactured in a state of being arranged in parallel in an array.

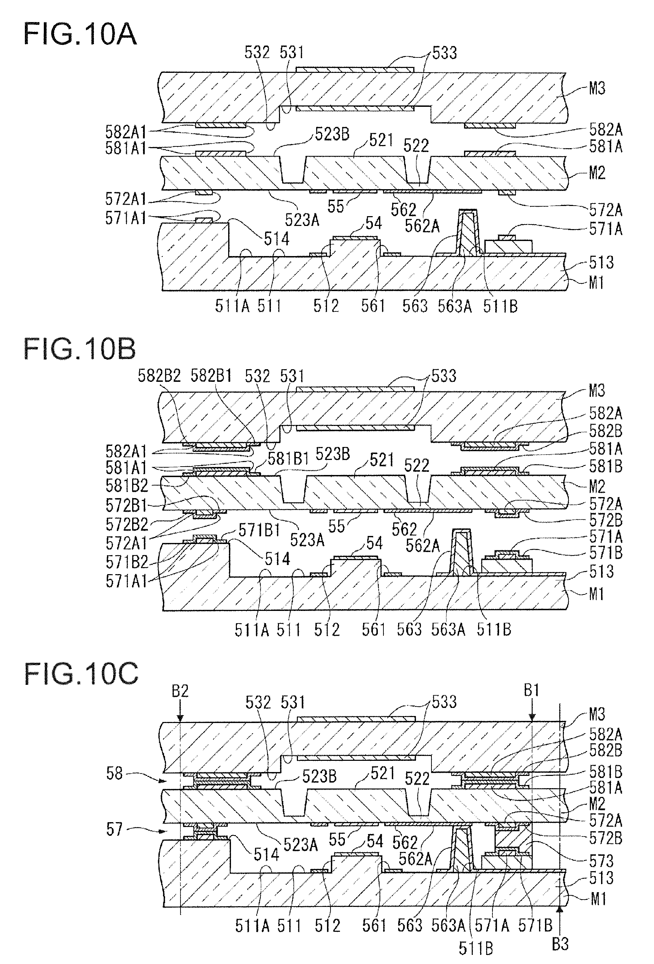

Then, a resin layer of polyimide is formed on the first glass substrate M1 and is etched, thereby forming the core 563A. Then, an electrode material (for example, a Cr/Au layer in the present embodiment) for forming the fixed electrode 561, the fixed extraction electrode 561A (omitted in Figs. 8A to 8D and omitted in Figs. 10A to 10C to be described later), and the bump electrode 563 is formed on the first glass substrate M1 in a thickness of, for example, 0.1 µm using a vacuum deposition method, a sputtering method, or the like. Then, a resist is applied to the first glass substrate M1, and the resist is patterned according to the shape of the fixed electrode 561, the fixed extraction electrode 561A, and the bump electrode 563 using a photolithography method. Then, etching is performed using the etching solution, and then the resist is removed. As a result, as shown in Fig. 8C, the fixed electrode 561, the fixed extraction electrode 561A, and the bump electrode 563 are formed.

In addition, when forming an insulating layer on the fixed electrode 561, for example, SiO₂ with a thickness of about 100 nm is formed on the entire surface of the fixed substrate 51 facing the movable substrate 52 using plasma CVD or the like after forming the fixed electrode 561. Then, SiO₂ formed on the fixed extraction electrode 561A of the terminal portion 513, the bump electrode 563 of the terminal portion 513, and the bump electrode 563 on the core 563A is removed by dry etching, for example.

Then, the fixed reflective film 54 is formed on the reflective film arrangement portion 512. In the present embodiment, an Ag alloy is used as the fixed reflective film 54. When using a metal film formed of Ag or an alloy film formed of Ag alloy, a reflective film (a metal film or an alloy film) is formed on the surface of the first glass substrate M1 and is then patterned using a photolithography method or the like.

In addition, when a dielectric multilayer film is formed as a reflective film, the dielectric multilayer film can be formed using a lift-off process, for example. In this case, a resist (lift-off pattern) is formed on a portion of the first glass substrate M1 other than a portion, in which the reflective film is formed, using a photolithography method or the like. Then, a material (for example, a dielectric multilayer film having a high refraction layer formed of TiO₂ and a low refraction layer of SiO₂) for forming the fixed reflective film 54 is formed using a sputtering method, a vapor deposition method, or the like. Then, after forming the fixed reflective film 54, an unnecessary portion of the film is removed by lift-off.

In this manner, as shown in Fig. 8D, the first glass substrate M1 on which a plurality of fixed substrates 51 are disposed in an array is formed.

### Movable substrate forming step

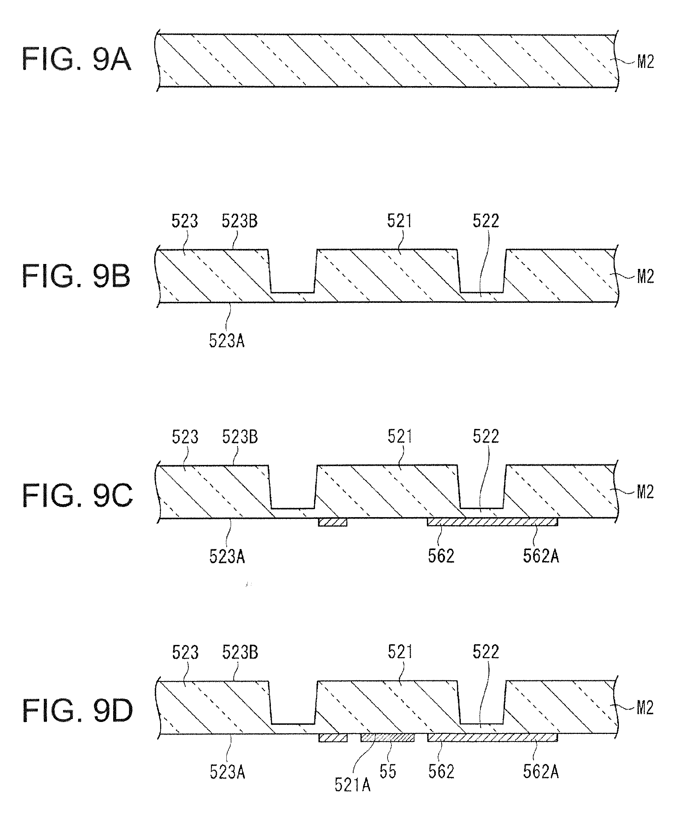

Next, the movable substrate forming step S2 will be described. Figs. 9A to 9D are diagrams showing the state of the second glass substrate M2 in the movable substrate forming step S2.

In the movable substrate forming step S2, as shown in Fig. 9A, both surfaces of the second glass substrate M2 (for example, the thickness is 0.5 mm) are finely polished first until the surface roughness Ra becomes equal to or less than 1 nm.

Then, a Cr/Au layer is formed on the surface of the second glass substrate M2. Then, a region equivalent to the holding portion 522 is etched in a thickness of 30 µm with the Cr/Au layer as an etching mask using hydrofluoric acid (BHF or the like), for example. Then, as shown in Fig. 9B, the second glass substrate M2 in which the shape of the movable substrate 52 is determined is manufactured by removing the Cr/Au layer used as an etching mask.

In the present embodiment, a plurality of movable substrates 52 are formed from the single second glass substrate M2. Accordingly, in this step, the second glass substrate M2 is etched so that a plurality of movable substrates 52 are manufactured in a state of being arranged in parallel in an array.

Then, as shown in Fig. 9C, the movable electrode 562 and the movable extraction electrode 562A are formed. When forming the movable electrode 562 and the movable extraction electrode 562A, it is possible to use the same method as when forming the fixed electrode 561 in the fixed substrate 51.

Then, as shown in Fig. 9D, the movable reflective film 55 is formed on the movable surface 521A. The movable reflective film 55 can also be formed using the same method as for the fixed reflective film 54.

In this manner, the second glass substrate M2 on which a plurality of movable substrates 52 are disposed in an array is manufactured.

### Cover substrate forming step

Next, the cover substrate forming step S3 will be described.

In the cover substrate forming step S3, both surfaces of the third glass substrate (for example, the thickness is 1.0 mm) are finely polished until the surface roughness Ra becomes equal to or less than 1 nm.

Then, the gap forming groove 531 is formed by performing etching with the surface of the third glass substrate M3 (refer to Figs. 10A to 10C) as a mask. In addition, the optical film 533 is formed on both of the surfaces of the third glass substrate M3 and is patterned by photolithography or the like.

### Base layer forming step

Fig. 10A shows a base layer forming step, Fig. 10B shows a metal layer forming step, and Fig. 10C shows a bonding step.

Then, the base layer forming step S4 is performed to form a base layer corresponding to the forming position of the first and second bonding portions 57 and 58 in the respective substrates 51, 52, and 53.

In the base layer forming step S4, activation processing is first performed on the bonding target surfaces 514, 523A, 523B, and 532 of the respective substrates M1, M2, and M3 formed by the steps S1, S2, and S3 described above. As examples of the activation processing, plasma treatment, UV treatment, and the like can be mentioned. However, it is preferable to perform plasma treatment in consideration of the influence on the reflective films 54 and 55. In addition, also in this plasma treatment, in order to prevent the deterioration of the reflective films 54 and 55, plasma treatment using inert gas (for example, Ar gas or N₂ gas) is performed.

Then, the resin layers 571A, 572A, 581A, and 582A that are base layers are formed on the surface-activated bonding target surfaces 514, 523A, 523B, and 532. Specifically, the resin layers 571A, 572A, 581A, and 582A containing polyorganosiloxane as a main component are formed by the plasma polymerization method using a metal mask. As the thickness of each of the resin layers 571A, 572A, 581A, and 582A, for example, a thickness of about 10 nm to 100 nm is set.

### Metal layer forming step

Then, as shown in Fig. 10B, the metal layer forming step S5 that forms the metal layers 571B, 572B, 581B, and 582B is performed.

In the metal layer forming step S5, activation processing is first performed on the bonding target surfaces 514, 523A, 523B, and 532 and the resin layers 571A, 572A, 581A, and 582A of the respective substrates M1, M2, and M3. As this activation processing, plasma treatment using inert gas is performed as in the base layer forming step.

Then, the metal layers 571B, 572B, 581B, and 582B are formed on the surface-activated bonding target surfaces 514, 523A, 523B, and 532 and the surface-activated resin layers 571A, 572A, 581A, and 582A using a sputtering method or the like. As the thickness of each of the metal layers 571B, 572B, 581B, and 582B, a sufficient thickness for a function as a gas barrier (thickness in which the airtightness can be ensured) is set. For example, each of the metal layers 571B, 572B, 581B, and 582B is formed in a thickness of 10 nm or more.

In addition, as described above, the metal layers 571B, 572B, 581B, and 582B are formed such that the resin layers 571A, 572A, 581A, and 582A are completely covered and the inner peripheral edges 571B1, 572B1, 581B1, 582B1 and the peripheral edges 571B2, 572B2, 581B2, 582B2 are in close contact with the bonding target surfaces 514, 523A, 523B, and 532.

In addition, although Au is used as the metal layers 571B, 572B, 581B, and 582B in the present embodiment, it is also possible to form an Au layer after forming another layer with good adhesion to Au and the glass substrates M1, M2, and M3, such as Cr or Ti.

### Bonding step

Then, as shown in Fig. 10C, the bonding step S6 is performed to bond the glass substrates M1, M2, and M3 to each other.

In this bonding step, the surfaces of the metal layers 571B, 572B, 581B, and 582B formed by the metal layer forming step S5 are activated. As this activation processing, plasma treatment using inert gas is performed as in the base layer forming step S4 or the metal layer forming step S5. In addition, UV activation processing or the like may be performed. In the case of UV activation processing, in order to prevent the deterioration of the reflective films 54 and 55 due to UV light, the reflective films 54 and 55 are covered with a UV mask or the like.

Then, the glass substrates M1, M2, and M3 are aligned for the superposition of the glass substrates M1, M2, and M3, and heat and pressure are applied to bonding portions. In this case, as the heating temperature, temperature at which the deterioration of the reflective films 54 and 55 does not occur is set. As a load applied at the time of heat pressing, for example, a load of 98 (N) is applied for 10 minutes.

In the bonding described above, in the first bonding portion 57, the surface of the metal layer 571B and the surface of the metal layer 572B are in contact with each other and are heat-pressed. As a result, the metal layers 571B and 572B are bonded to each other by metal bonding. In the first and second glass substrates M1 and M2, since processing, such as etching, has been performed, the surface accuracy of the bonding target surfaces 514 and 523A may also be low. In this case, when each metal layer is directly formed on the bonding target surfaces 514 and 523A, the surface of each metal layer also becomes rough depending on the surface accuracy of the substrate surface, and minute unevenness is formed. Accordingly, even when metal layers are bonded to each other by heat pressing, the surfaces of the metal layers are not in contact with each other appropriately, and the airtightness is reduced.

In contrast, in the present embodiment, the resin layers 571A and 572A are provided as base layers. For this reason, even if there is a roughness (minute unevenness) of the substrate surface, the unevenness is absorbed by the resin layers 571A and 572A, and the surface accuracy of the metal layers 571B and 572B is improved. Therefore, since it is possible to make surface contact between the facing surfaces of the metal layers 571B and 572B with high surface accuracy, it is possible to perform highly airtight bonding while improving the bonding yield. In addition, since the adhesion between the metal layers 571B and 572B can be further improved by heat pressing, it is possible to further improve the airtightness. This is the same as for the second bonding portion 58.

Then, a cutting step of extracting the fixed substrate 51 and the movable substrate 52 in units of a chip is performed. Specifically, only the second and third glass substrates M2 and M3 are cut along the line B1 shown in Fig. 10C. Then, the first glass substrate M1, the second glass substrate M2, and the third glass substrate M3 are cut along the line B2. Finally, the first glass substrate M1 is cut along the line B3. In addition, in the cutting of the lines B1 to B3, the cutting order does not matter. For this cutting, for example, scribe break, laser cutting, and the like can be used.

Then, the electrode extraction groove 511B is sealed with the sealing material 573. At the time of sealing using the sealing material 573, the processing on the cut bonded body (structure obtained by bonding the glass substrates M1, M2, and M3) is performed within the vacuum chamber. As a result, the wavelength tunable interference filter 5 in which the first internal space Sp1 and the second internal space Sp2 are sealed in an airtight manner in a vacuum state is manufactured.

In addition, in order to ensure the airtightness more, another sealing material may be injected along the outer peripheral portion of each of the bonding portions 57 and 58, that is, the outer peripheral edge of each of the substrates 51, 52, and 53.

### Operations and effects of the first embodiment

In the present embodiment, the first bonding portion 57 includes the resin layer 571A provided on the fixed substrate 51, the metal layer 571B that covers the resin layer 571A, the resin layer 572A provided on the movable substrate 52, and the metal layer 572B that covers the resin layer 572A. In addition, since the metal layers 571B and 572B are metal-bonded to each other, the fixed substrate 51 and the movable substrate 52 are bonded to each other by the first bonding portion 57.

In such a bonding configuration, even if the surface accuracy of the substrates 51 and 52 is poor and minute unevenness is formed, the unevenness can be absorbed by the resin layers 571A and 572A. For this reason, the uneven shape of the substrate does not appear on the surfaces of the metal layers 571B and 572B. Accordingly, since the surface accuracy of the metal layers 571B and 572B is high, the entire surfaces of the metal layers 571B and 572B can be made to be in close contact with each other. As a result, it is possible to perform highly airtight bonding while improving the bonding yield.

In addition, although the airtightness of the resin layers 571A and 572A that are base layers is not high due to small air bubbles or the like compared with the metal layers 571B and 572B, the resin layers 571A and 572A are covered by the metal layers 571B and 572B. Accordingly, the first internal space Sp1 does not communicate with the outside through the resin layers 571A and 572A. In addition, since metal bonding using the metal layers 571B and 572B is performed, it is possible to perform highly airtight bonding.

In the present embodiment, the cover substrate 53 is bonded to the movable substrate 52 by the second bonding portion 58. The second bonding portion 58 includes the resin layer 581A provided on the movable substrate 52, the metal layer 581B that covers the resin layer 581A, the resin layer 582A provided on the cover substrate 53, and the metal layer 582B that covers the resin layer 582A. In addition, since the metal layers 581B and 582B are metal-bonded to each other, the movable substrate 52 and the cover substrate 53 are bonded to each other by the second bonding portion 58. Therefore, similar to the first bonding portion 57, it is possible to perform highly airtight bonding while improving the bonding yield.

In the present embodiment, the first internal space Sp1 and the second internal space Sp2 are maintained in an airtight manner in a vacuum state (or in a state decompressed from atmospheric pressure) by the first and second bonding portions 57 and 58. Accordingly, when changing the size of the gap between the reflective films 54 and 55 using the electrostatic actuator 56, it is possible to reduce the influence of air resistance. As a result, it is possible to improve the responsiveness when driving the wavelength tunable interference filter 5.

In addition, since the first internal space Sp1 and the second internal space Sp2 are sealed in an airtight manner, it is possible to prevent the penetration of charged particles, water droplets, and the like, for example. Therefore, it is possible to suppress malfunction or the deterioration of the reflective films 54 and 55 due to penetration of these particles.

In the present embodiment, the resin layers 571A, 572A, 581A, and 582A formed by the plasma polymerized film containing polyorganosiloxane as a main component are used as base layers.

Since such a plasma polymerized film can be formed by a simple method using a metal mask, it is possible to improve the manufacturing efficiency.

In addition, the degree of freedom in selecting the material of the metal layers 571B, 572B, 581B, and 582B can be improved by using the resin layers 571A, 572A, 581A, and 582A.

In the base layer forming step S4, the resin layers 571A, 572A, 581A, and 582A are formed after plasma treatment of the surface of the glass substrates M1, M2, and M3. Therefore, since it is possible to improve the adhesion between the resin layers 571A, 572A, 581A, and 582A and the glass substrate M1, M2, and M3, it is possible to suppress the peeling and the like of the resin layers 571A, 572A, 581A, and 582A.

In the metal layer forming step S5, the metal layers 571B, 572B, 581B, and 582B are formed after plasma treatment of the surfaces of the glass substrates M1, M2, and M3 and the surfaces of the resin layers 571A, 572A, 581A, and 582A. Therefore, since it is possible to improve the adhesion between the metal layers 571B, 572B, 581B, and 582B and the glass substrates M1, M2, and M3 or the resin layers 571A, 572A, 581A, and 582A, it is possible to suppress the peeling and the like of the metal layers 571B, 572B, 581B, and 582B.

In the bonding step S6, the surfaces of the metal layers 571B, 572B, 581B, and 582B are activated by plasma treatment and are heat-pressed.

Thus, since the surfaces of the metal layers 571B, 572B, 581B, and 582B can be activated by activation processing, an easy bonding state can be realized. In addition, since bonding portions can be easily bonded to each other by heat pressing, strong metal bonding can be performed appropriately.

In addition, since N₂ gas or Ar gas is used in plasma treatment, it is possible to suppress the deterioration of the reflective films 54 and 55. In addition, since a predetermined pressure bonding temperature at which there is no influence on the reflective films 54 and 55 is set at the time of heat pressing, it is possible to suppress the deterioration of the reflective films 54 and 55.

### Modification example of the first embodiment

In the first embodiment described above, the configuration has been illustrated in which the fixed extraction electrode 561A and the bump electrode 563 are pulled out to the terminal portion 513 from the electrode extraction groove 511B and the electrode extraction groove 511B is sealed with the sealing material 573. However, the invention is not limited thereto.

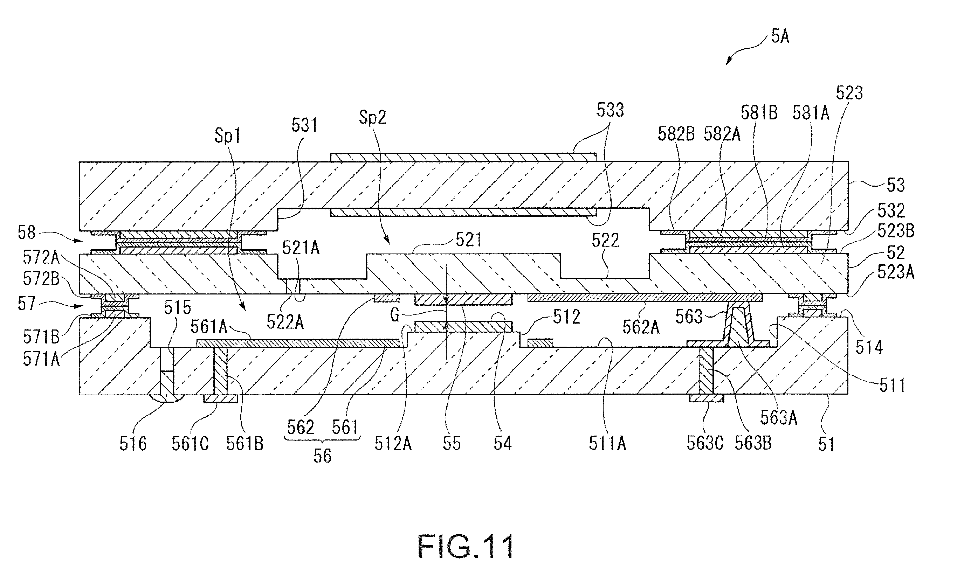

Fig. 11 is a cross-sectional view showing the schematic configuration of a wavelength tunable interference filter 5A in a modification example of the first embodiment.

As shown in Fig. 11, it is possible to adopt a configuration in which penetrating electrodes 561B and 563B that pass through the fixed substrate 51 in the thickness direction are provided and the fixed extraction electrode 561A and the bump electrode 563 are connected to the penetrating electrodes 561B and 563B, respectively. For example, the penetrating electrodes 561B and 563B can be formed by forming a through hole in the fixed substrate 51 using a diamond drill, sandblasting, or the like and sealing the through hole by the plating of Au or the like. In addition, a metal rod (penetrating electrodes 561B and 563B) may be embedded at the time of glass formation of the fixed substrate 51.

In addition, on a surface of the fixed substrate 51 not facing the movable substrate 52, a fixed electrode terminal 561C connected to the fixed extraction electrode 561A through the penetrating electrode 561B is provided, and a bump electrode terminal 563C connected to the bump electrode 563 through the penetrating electrode 563B is provided. By connecting the fixed electrode terminal 561C and the bump electrode terminal 563C to the voltage controller 15 in this manner, it is possible to control the electrostatic actuator 56.

In addition, a first hole 515 that communicates the first internal space Sp1 with the outside of the wavelength tunable interference filter 5 is formed in the fixed substrate 51. The first hole 515 is sealed with a sealing material 516 in a state where the first internal space Sp1 and the second internal space Sp2 are decompressed. As the sealing material 516, an adhesive, low-melting-point glass, low-melting-point metal such as Au, and the like are used.

In the wavelength tunable interference filter 5A, the glass substrates M1, M2, and M3 are bonded to each other, and then the air of the first internal space Sp1 and the second internal space Sp2 is sucked through the first hole 515 to realize a vacuum state. Then, sealing is performed using the sealing material 516.

### Second embodiment

Next, a second embodiment of the invention will be described with reference to the accompanying diagrams.

In the first embodiment described above, the example has been illustrated in which the bonding target surfaces 514, 523A, 523B, and 532 are planes and the resin layers 571A, 572A, 581A, and 582A, which are base layers, are formed on the bonding target surfaces 514, 523A, 523B, and 532.

However, when forming the resin layers 571A, 572A, 581A, and 582A, the thickness of the edges 571A1, 572A1, 581A1, and 582A1 may be larger than that of other portions due to the rise of the edges 571A1, 572A1, 581A1, and 582A1 and the like. In this case, portions, which correspond to the edges 571A1, 572A1, 581A1, and 582A1, of the metal layers 571B, 572B, 581B, and 582B formed on the resin layers 571A, 572A, 581A, and 582A also rise. Accordingly, since the metal layers 571B and 572B or the metal layers 581B and 582B are in contact with each other only in the rise portion, there is a possibility that the airtightness cannot be sufficiently ensured. In this case, there is a possibility that the bonding strength will also be reduced.

In contrast, in the second embodiment, the forming positions of the resin layers 571A, 572A, 581A, and 582A are different from those in the first embodiment in consideration of such a change in the shape of the resin layer when forming the base layer.

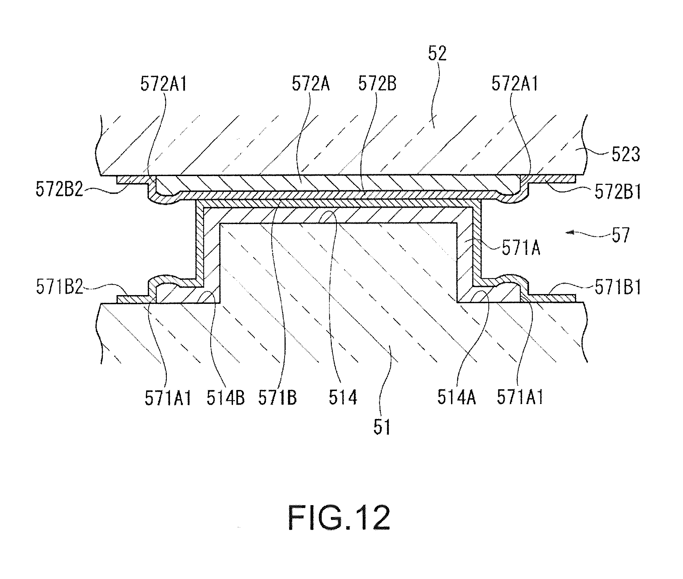

Fig. 12 is an enlarged sectional view showing the vicinity of the first bonding portion 57A in the second embodiment.

As shown in Fig. 12, in the fixed substrate 51 of the present embodiment, in filter plan view, a recess formed by etching is provided in the periphery of the fixed side bonding target surface 514 (bonding surface), and the bottom surface of the recess forms first surfaces 514A and 514B, a distance between each of the first surfaces 514A and 514B and the movable substrate 52 being longer than a distance between the fixed side bonding target surface 514 and the movable substrate 52. In addition, in filter plan view, the first surface 514A on the inner side of the fixed side bonding target surface 514 may be the electrode arrangement surface 511A, and the first surface 514B on the outer side of the fixed side bonding target surface 514 may be the terminal portion 513.

In addition, the resin layer 571A of the first bonding portion 57 is provided over the first surfaces 514A and 514B from the fixed side bonding target surface 514. That is, the resin layer 571A is formed so as to cover the fixed side bonding target surface 514.

In addition, the metal layer 571B is provided so as to cover the resin layer 571A. Accordingly, the inner peripheral edge 571B1 of the metal layer 571B is located on the first surface 514A, and the outer peripheral edge 571B2 is located on the first surface 514B.

On the other hand, the resin layer 572A provided on the movable substrate 52 is provided so as to cover the fixed side bonding target surface 514 in filter plan view. That is, the movable substrate 52 is provided over the portion facing the first surfaces 514A and 514B from the portion facing the fixed side bonding target surface 514. Accordingly, the edge of the resin layer 572A is present at a position facing the first surface 514A and a position facing the first surface 514B.

In addition, since the metal layer 572B is provided so as to cover the resin layer 572A, the inner peripheral edge 572B1 of the metal layer 571B is present at a position of the first movable side bonding target surface 523A facing the first surface 514A, and the outer peripheral edge 572B2 is present at a position of the first movable side bonding target surface 523A facing the first surface 514B.

In the second embodiment, the edges of the resin layers 571A and 571B that are base layers are located on the first surfaces 514A and 514B or present at positions facing the first surfaces 514A and 514B. For this reason, in the edge, even if the rise that causes the thickness of the edge to be larger than that of other portions occurs in the edge and a protruding portion is also generated in the metal layers 571B and 572B, there is no influence on bonding between the metal layers 571B and 572B on the bonding target surfaces 514 and 523A. Therefore, it is possible to perform highly airtight bonding while improving the bonding yield.

In addition, although Fig. 12 shows the configuration in which the first surfaces 514A and 514B are provided on the fixed substrate 51, the invention is not limited to such a configuration, and it is possible to adopt a configuration in which a first surface is provided in the periphery of the first movable side bonding target surface 523A of the movable substrate 52 and the resin layer 572A is formed over the first surface from the first movable side bonding target surface 523A. In addition, the first surface may also be provided on both of the fixed substrate 51 and the movable substrate 52.

In addition, although the above explanation has been given for the first bonding portion 57, the explanation is the same for the second bonding portion 58. That is, the first surface may be provided in the periphery of the second movable side bonding target surface 523B of the movable substrate 52, and the resin layer 581A may be formed over the first surface from the second movable side bonding target surface 523B. Alternatively, the first surface may be provided in the periphery of the cover side bonding target surface 532 of the cover substrate 53, and the resin layer 582A may be formed over the first surface from the cover side bonding target surface 532.

### Other embodiments

In addition, the invention is not limited to the embodiment described above, and various modifications or improvements may be made without departing from the scope and spirit of the invention.

For example, the resin layer may be formed of an epoxy-based photosensitive material or other metals softer than the metal layer (Au) without being limited to the plasma polymerized film, as described above. When using the epoxy-based photosensitive material as the resin layer, patterning using a photomask can be performed. Therefore, it is possible to improve the accuracy of the forming position of the resin layer.

In addition, although the configuration in which the resin layers 571A and 572A, which are base layers, are provided in the first bonding portion 57 is adopted, the invention is not limited thereto.

A base layer may be provided on one of the fixed substrate 51 and the movable substrate 52. Therefore, for example, the metal layer 571B may be provided on the fixed substrate 51 with the resin layer 571A interposed therebetween, and the metal layer 572B may be directly provided on the movable substrate 52. Alternatively, the metal layer 571B may be directly provided on the fixed substrate 51, and the metal layer 572B may be provided on the movable substrate 52 with the resin layer 572A interposed therebetween.

Similarly, also in the second bonding portion 58, a base layer may be provided on one of the movable substrate 52 and the cover substrate 53. For example, the metal layer 581B may be provided on the movable substrate 52 with the resin layer 581A interposed therebetween, and the metal layer 582B may be directly provided on the cover substrate 53. Alternatively, the metal layer 581B may be directly provided on the movable substrate 52, and the metal layer 582B may be provided on the cover substrate 53 with the resin layer 582A interposed therebetween.

In addition, for example, also in the case of the configuration in which the metal layer 571B is provided on the fixed substrate 51 with the resin layer 571A interposed therebetween and the metal layer 572B is directly provided on the movable substrate 52 as described above, it is preferable to form the fixed side bonding target surface 514 and the first surfaces 514A and 514B on the fixed substrate 51 and form the resin layer 571A over the first surfaces 514A and 514B from the fixed side bonding target surface 514 as illustrated in the second embodiment.

In addition, in the case of the configuration in which the metal layer 572B is provided on the movable substrate 52 with the resin layer 572A interposed therebetween and the metal layer 571B is directly provided on the fixed substrate 51, it is preferable to form the fixed side bonding target surface 514 and the first surfaces 514A and 514B on the fixed substrate 51 and form the resin layer 572A over the portion facing the first surfaces 514A and 514B from the portion facing the fixed side bonding target surface 514 of the movable substrate 52. Also in this case, even if the rise occurs in the outer peripheral edge of the resin layer 572A, there is no influence of the rise portion when bonding the metal layer 571B and 572B to each other. Therefore, it is possible to perform bonding with high adhesion.

In addition, although the electrostatic actuator 56 is illustrated as a gap change portion and the configuration of changing the size of the gap G1 between the fixed reflective film 54 and the movable reflective film 55 using the electrostatic actuator 56 is illustrated in each embodiment described above, the invention is not limited thereto.

For example, a dielectric actuator, which is formed by a first dielectric coil provided on the fixed substrate 51 and a second dielectric coil or a permanent magnet provided on the movable substrate 52, may be used as a gap change portion.

In addition, a piezoelectric actuator may be used instead of the electrostatic actuator 56. In this case, the holding portion 522 can be bent, for example, by laminating a lower electrode layer, a piezoelectric layer, and an upper electrode layer on the holding portion 522 and expanding and contracting the piezoelectric layer by changing a voltage, which is applied between the lower electrode layer and the upper electrode layer, as an input value.

In addition, the invention can also be applied to the wavelength fixed side Fabry-Perot etalon in which no gap change portion is provided.

In a wavelength fixed type interference filter, the movable portion 521 or the holding portion 522 as in the embodiment described above is not provided. Accordingly, a distance (gap G1 between the reflective films 54 and 55) between the first substrate (movable substrate 52) and the second substrate (fixed substrate 51) is maintained constant.

In this case, since the fixed substrate 51 and the movable substrate 52 are bonded to each other with high airtightness by the first bonding portion 57, it is possible to prevent the penetration of foreign matters into a region between the fixed substrate 51 and the movable substrate 52. Therefore, it is possible to suppress the deterioration of the reflective films 54 and 55.

In addition, although the example in which the movable substrate 52 (first substrate), on which the movable reflective film 55 (first reflective film) is provided, and the fixed substrate 51 (second substrate), on which the fixed reflective film 54 (second reflective film) is provided, are bonded to each other by the first bonding portion 57 is shown in the embodiment described above, the invention is not limited thereto. For example, the second reflective film may not be provided on the second substrate.

In addition, although the configuration including the cover substrate 53 that is a third substrate has been illustrated in the embodiment described above, the third substrate may not be provided.

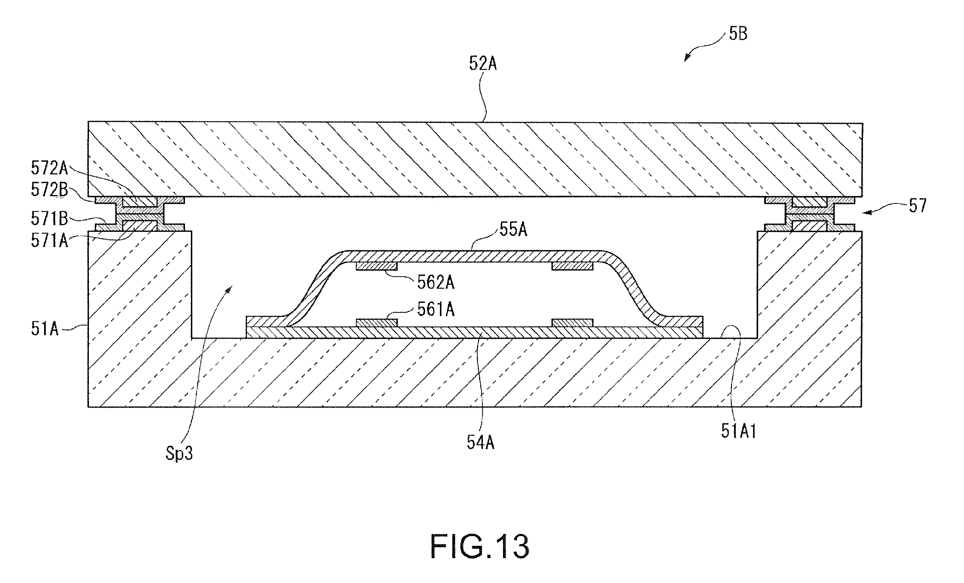

Hereinafter, a specific example of such an interference filter will be described with reference to Fig. 13.

Fig. 13 is a cross-sectional view showing the schematic configuration of a wavelength tunable interference filter according to another embodiment of the invention.

In a wavelength tunable interference filter 5B shown in Fig. 13, first and second substrates 51A and 52A are disposed so as to face each other. The first and second substrates 51A and 52A are bonded to each other by a first bonding portion 57 (or a first bonding portion 57A) having the same configuration as in each embodiment described above, thereby forming internal space SP3.

In addition, a groove 51A1 formed by, for example, etching is provided in the first substrate 51A, and a first reflective film 54A is provided in the groove 51A1. In addition, a second reflective film 55A is disposed so as to face the first reflective film 54A with a predetermined gap G1 interposed therebetween.

In addition, a first driving electrode 561A that forms an electrostatic actuator 56A is provided on the first reflective film 54A, and a second driving electrode 562A that forms the electrostatic actuator 56A is provided on the second reflective film 55A.

In such a configuration, the first reflective film 54A is formed on the first substrate 51A and the first driving electrode 561A is formed, and then a sacrificial layer is formed. Then, the second driving electrode 562A is formed on the sacrificial layer, and the second reflective film 55A is formed. Finally, the sacrificial layer is removed by etching or the like. Thus, it is possible to form the reflective films 54A and 55A and the driving electrodes 561A and 562A shown in Fig. 13.

Also in the wavelength tunable interference filter 5B, the first and second substrates 51A and 52A are bonded to each other by the first bonding portion 57 (or the first bonding portion 57A). Therefore, as in the embodiment described above, since it is possible to bond the first and second substrates 51A and 52A to each other with high airtightness, it is possible to maintain the high airtightness of the internal space SP3.

In addition, in each embodiment described above, the spectrometer 1 has been illustrated as the electronic apparatus according to the invention. However, the optical module, and the electronic apparatus according to the invention can also be applied in various fields.

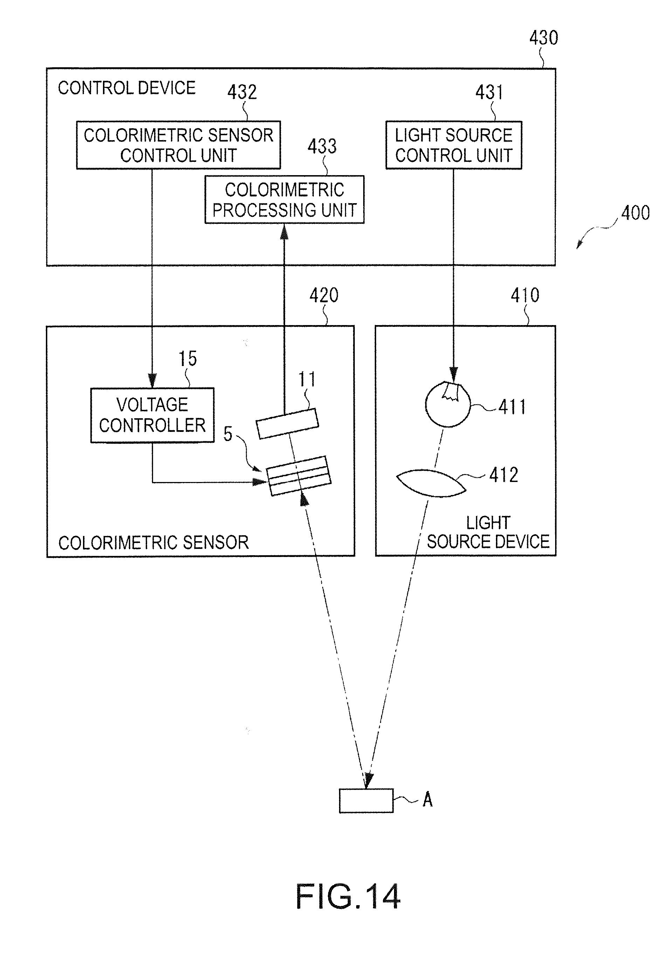

For example, as shown in Fig. 14, the electronic apparatus according to the invention can also be applied to a color measuring apparatus for measuring the color.

Fig. 14 is a block diagram showing an example of a color measuring apparatus 400 including a wavelength tunable interference filter.

As shown in Fig. 14, the color measuring apparatus 400 includes a light source device 410 that emits light to a test target A, a colorimetric sensor 420 (optical module), and a control device 430 that controls the overall operation of the color measuring apparatus 400. In addition, the color measuring apparatus 400 is an apparatus that reflects light emitted from the light source device 410 by the test target A, receives the reflected light to be examined using the colorimetric sensor 420, and analyzes and measures the chromaticity of the light to be examined, that is, the color of the test target A, on the basis of a detection signal output from the colorimetric sensor 420.

The light source device 410 includes a light source 411 and a plurality of lenses 412 (only one lens is shown in Fig. 14), and emits reference light (for example, white light) to the test target A. In addition, a collimator lens may be included in the plurality of lenses 412. In this case, the light source device 410 forms the reference light emitted from the light source 411 as parallel light using the collimator lens and emits the parallel light from a projection lens (not shown) toward the test target A. In addition, although the color measuring apparatus 400 including the light source device 410 is illustrated in the present embodiment, the light source device 410 may not be provided, for example, when the test target A is a light emitting member, such as a liquid crystal panel.

The colorimetric sensor 420 is an optical module according to the invention, and includes the wavelength tunable interference filter 5, the detector 11 that receives light transmitted through the wavelength tunable interference filter 5, and the voltage controller 15 that changes the wavelength of the light transmitted through the wavelength tunable interference filter 5 as shown in Fig. 14. In addition, the colorimetric sensor 420 includes an incident optical lens (not shown) that is provided at a position facing the wavelength tunable interference filter 5 and guides reflected light (light to be examined), which is reflected by the test target A, to the inside. In the colorimetric sensor 420, the wavelength tunable interference filter 5 separates light having a predetermined wavelength among light beams to be examined incident from the incident optical lens, and the detector 11 receives the separated light. In addition, the wavelength tunable interference filter 5A described above may be provided instead of the wavelength tunable interference filter 5.

The control device 430 controls the overall operation of the color measuring apparatus 400.

As the control device 430, for example, a general-purpose personal computer, a personal digital assistant, and a computer dedicated to color measurement can be used. In addition, as shown in Fig. 14, the control device 430 is configured to include a light source control unit 431, a colorimetric sensor control unit 432, and a colorimetric processing unit 433.

The light source control unit 431 is connected to the light source device 410, and outputs a predetermined control signal to the light source device 410 on the basis of, for example, a setting input from the user so that white light with predetermined brightness is emitted from the light source device 410.

The colorimetric sensor control unit 432 is connected to the colorimetric sensor 420, and sets a wavelength of light received by the colorimetric sensor 420 on the basis of, for example, a setting input from the user and outputs a control signal, which indicates that the amount of received light with this wavelength is to be detected, to the colorimetric sensor 420. Then, the voltage controller 15 of the colorimetric sensor 420 applies a voltage to the electrostatic actuator 56 on the basis of the control signal, thereby driving the wavelength tunable interference filter 5.

The colorimetric processing unit 433 analyzes the chromaticity of the test target A from the amount of received light detected by the detector 11.

In addition, as another example of the electronic apparatus according to the invention, a light-based system for detecting the presence of a specific material can be mentioned. As examples of such a system, an in-vehicle gas leak detector that detects specific gas with high sensitivity by adopting a spectroscopic measurement method using the optical module according to the invention or a gas detector, such as a photoacoustic rare gas detector for breast test, can be exemplified.

An example of such a gas detector will now be described with reference to the accompanying diagrams.

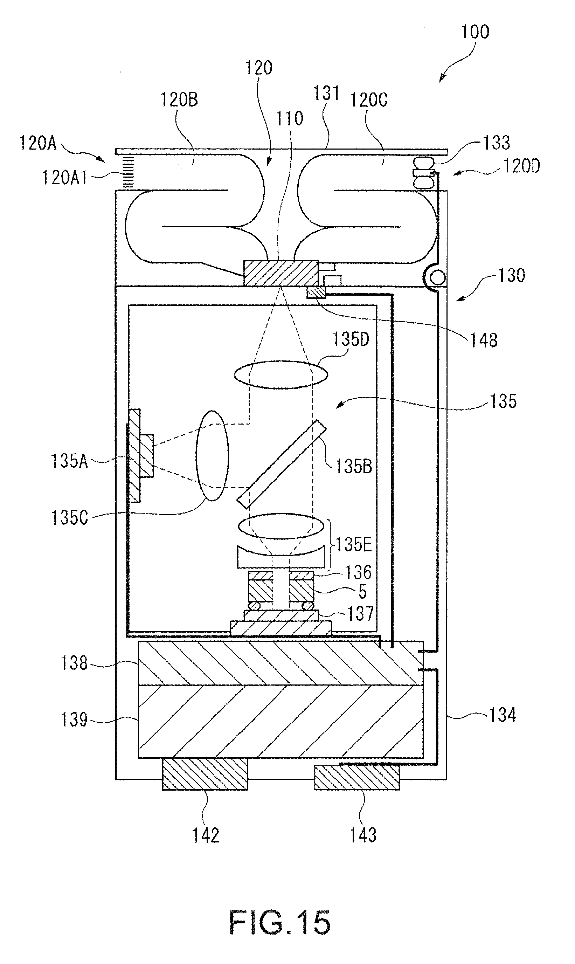

Fig. 15 is a schematic diagram showing an example of a gas detector including the optical module according to the invention.

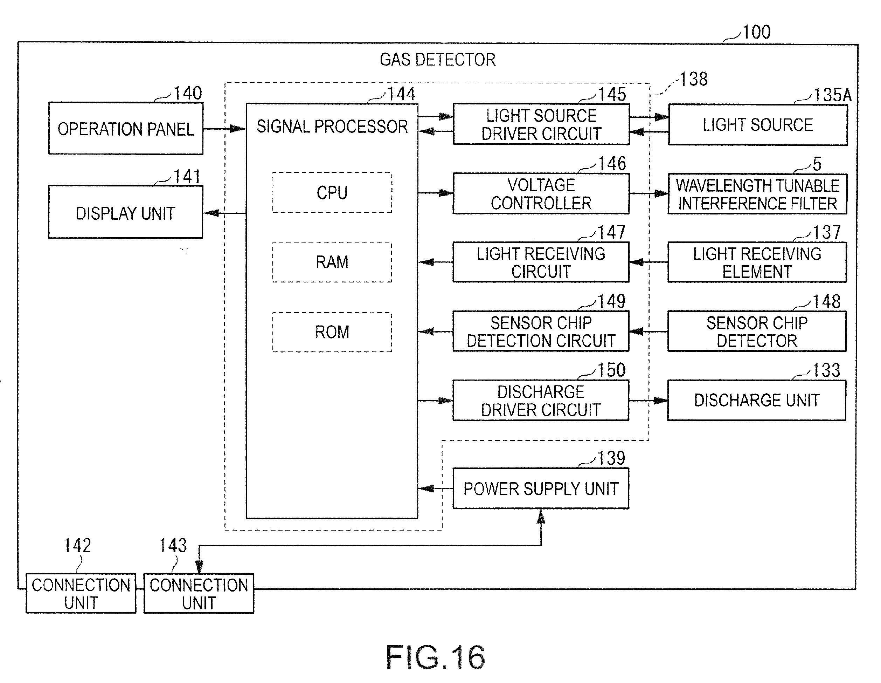

Fig. 16 is a block diagram showing the configuration of a control system of the gas detector shown in Fig. 15.

As shown in Fig. 15, a gas detector 100 is configured to include a sensor chip 110, a flow path 120 including a suction port 120A, a suction flow path 120B, a discharge flow path 120C, and a discharge port 120D, and a main body 130.

The main body 130 is configured to include: a detector (optical module) including a sensor cover 131 having an opening through which the flow path 120 can be attached or detached, a discharge unit 133, a housing 134, an optical unit 135, a filter 136, the wavelength tunable interference filter 5, and a light receiving element 137 (detection unit) ; a control unit 138 (processing unit) that processes a detected signal and controls the detection unit; and a power supply unit 139 that supplies electric power. In addition, the wavelength tunable interference filter 5A described above may be provided instead of the wavelength tunable interference filter 5. In addition, the optical unit 135 is configured to include a light source 135A that emits light, a beam splitter 135B that reflects the light incident from the light source 135A toward the sensor chip 110 and transmits the light incident from the sensor chip side toward the light receiving element 137, and lenses 135C, 135D, and 135E.

In addition, as shown in Fig. 16, an operation panel 140, a display unit 141, a connection unit 142 for interface with the outside, and the power supply unit 139 are provided on the surface of the gas detector 100. When the power supply unit 139 is a secondary battery, a connection unit 143 for charging may be provided.

In addition, as shown in Fig. 16, the control unit 138 of the gas detector 100 includes a signal processor 144 formed by a CPU or the like, a light source driver circuit 145 for controlling the light source 135A, a voltage controller 146 for controlling the wavelength tunable interference filter 5, a light receiving circuit 147 that receives a signal from the light receiving element 137, a sensor chip detection circuit 149 that reads a code of the sensor chip 110 and receives a signal from a sensor chip detector 148 that detects the presence of the sensor chip 110, and a discharge driver circuit 150 that controls the discharge unit 133.

Next, the operation of the gas detector 100 will be described below.

The sensor chip detector 148 is provided inside the sensor cover 131 located in the upper portion of the main body 130, and the presence of the sensor chip 110 is detected by the sensor chip detector 148. When a detection signal from the sensor chip detector 148 is detected, the signal processor 144 determines that the sensor chip 110 is mounted, and outputs a display signal to display "detection operation is executable" on the display unit 141.

Then, for example, when the operation panel 140 is operated by the user and an instruction signal indicating the start of detection processing is output from the operation panel 140 to the signal processor 144, the signal processor 144 first outputs a signal for operating the light source to the light source driver circuit 145 to operate the light source 135A. When the light source 135A is driven, linearly-polarized stable laser light with a single wavelength is emitted from the light source 135A. In addition, a temperature sensor or a light amount sensor is provided in the light source 135A, and the information is output to the signal processor 144. In addition, when it is determined that the light source 135A is stably operating on the basis of the temperature or the amount of light input from the light source 135A, the signal processor 144 controls the discharge driver circuit 150 to operate the discharge unit 133. Then, a gas sample containing a target material (gas molecules) to be detected is guided from the suction port 120A to the suction flow path 120B, the inside of the sensor chip 110, the discharge flow path 120C, and the discharge port 120D. In addition, a dust filter 120A1 is provided on the suction port 120A in order to remove relatively large dust particles, water vapor, and the like.

In addition, the sensor chip 110 is a sensor in which a plurality of metal nanostructures are included and which uses localized surface plasmon resonance. In such a sensor chip 110, an enhanced electric field is formed between the metal nanostructures by laser light. When gas molecules enter the enhanced electric field, Rayleigh scattered light and Raman scattered light including the information of molecular vibration are generated.

Such Rayleigh scattered light or Raman scattered light is incident on the filter 136 through the optical unit 135, and the Rayleigh scattered light is separated by the filter 136 and the Raman scattered light is incident on the wavelength tunable interference filter 5. In addition, the signal processor 144 outputs a control signal to the voltage controller 15. Then, the voltage controller 15 drives the electrostatic actuator 56 of the wavelength tunable interference filter 5 in the same manner as in the first embodiment described above, and separates the Raman scattered light corresponding to gas molecules to be detected using the wavelength tunable interference filter 5. Then, when the separated light is received by the light receiving element 137, a light receiving signal corresponding to the amount of received light is output to the signal processor 144 through the light receiving circuit 147. In this case, the target Raman scattered light can be accurately extracted from the wavelength tunable interference filter 5.

The signal processor 144 determines whether or not the gas molecules to be detected obtained as described above are target gas molecules by comparing the spectral data of the Raman scattered light corresponding to the gas molecules to be detected with the data stored in the ROM, and specifies the material. In addition, the signal processor 144 displays the result information on the display unit 141, or outputs the result information to the outside through the connection unit 142.

In addition, in Figs. 15 and 16, the gas detector 100 that separates Raman scattered light using the wavelength tunable interference filter 5 and detects gas from the separated Raman scattered light has been illustrated. However, as a gas detector, it is also possible to use a gas detector that specifies the type of gas by detecting the gas-specific absorbance. In this case, a gas sensor that detects light absorbed by gas, among incident light beams, after making gas flown into the sensor is used as the optical module according to the invention. In addition, a gas detector that analyzes and determines gas flowing into the sensor using a gas sensor is used as the electronic apparatus according to the invention. Also in such a configuration, it is possible to detect components of gas using the wavelength tunable interference filter.

In addition, as a system for detecting the presence of a specific material, a material component analyzer, such as a non-invasive measuring apparatus for obtaining the information regarding sugar using near-infrared spectroscopy or a non-invasive measuring apparatus for obtaining the information regarding the food, minerals, the body, and the like can be exemplified without being limited to the gas detection described above.

Hereinafter, a food analyzer will be described as an example of the material component analyzer.

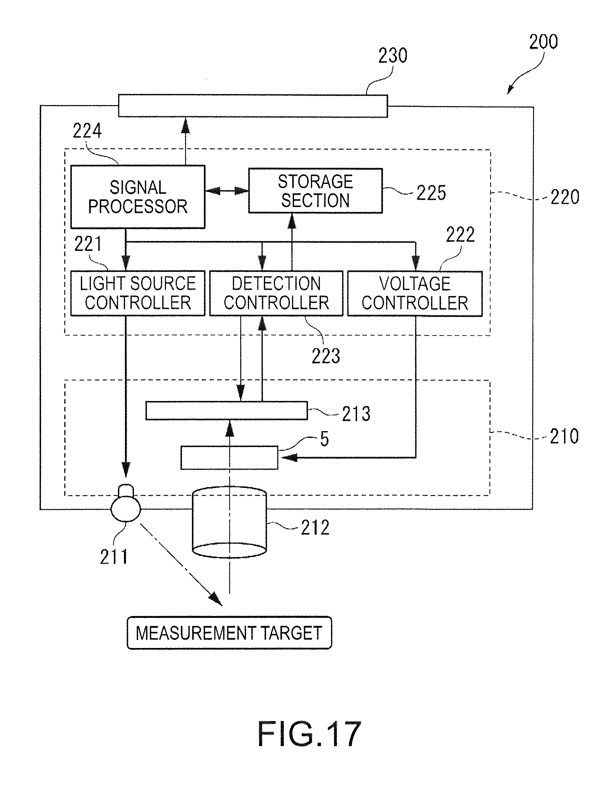

Fig. 17 is a diagram showing the schematic configuration of a food analyzer that is an example of the electronic apparatus using the optical module according to the invention.

As shown in Fig. 17, a food analyzer 200 includes a detector 210 (optical module), a control unit 220, and a display unit 230. The detector 210 includes a light source 211 that emits light, an imaging lens 212 to which light from a measurement target is introduced, the wavelength tunable interference filter 5 that can separate the light introduced from the imaging lens 212, and an imaging unit 213 (detection unit) that detects the separated light. In addition, the wavelength tunable interference filter 5A described above may be provided instead of the wavelength tunable interference filter 5.

In addition, the control unit 220 includes a light source controller 221 that performs ON/OFF control of the light source 211 and brightness control at the time of lighting, a voltage controller 222 that controls the wavelength tunable interference filter 5, a detection controller 223 that controls the imaging unit 213 and acquires a spectral image captured by the imaging unit 213, a signal processor 224, and a storage section 225.

In the food analyzer 200, when the system is driven, the light source controller 221 controls the light source 211 so that light is emitted from the light source 211 to the measurement target. Then, light reflected by the measurement target is incident on the wavelength tunable interference filter 5 through the imaging lens 212. By the control of the voltage controller 15, the wavelength tunable interference filter 5 is driven according to the driving method shown in the first embodiment. Therefore, light having a desired wavelength can be accurately extracted from the wavelength tunable interference filter 5. In addition, the extracted light can be imaged by the imaging unit 213 formed by a CCD camera, for example. In addition, the imaged light is stored in the storage section 225 as a spectral image. In addition, the signal processor 224 changes the value of a voltage applied to the wavelength tunable interference filter 5 by controlling the voltage controller 15, thereby obtaining a spectral image for each wavelength.

Then, the signal processor 224 calculates a spectrum in each pixel by performing arithmetic processing on the data of each pixel in each image stored in the storage section 225. In addition, for example, information regarding the components of the food for the spectrum is stored in the storage section 225. The signal processor 224 analyzes the data of the obtained spectrum on the basis of the information regarding the food stored in the storage section 225, and calculates food components contained in the detection target and the content. In addition, food calories, freshness, and the like can be calculated from the obtained food components and content. In addition, by analyzing the spectral distribution in the image, it is possible to extract a portion, of which freshness is decreasing, in the food to be examined. In addition, it is also possible to detect foreign matter contained in the food.

Then, the signal processor 224 performs processing for displaying the information obtained as described above, such as the components or the content of the food to be examined and the calories or freshness of the food to be examined, on the display unit 230.

In addition, although an example of the food analyzer 200 is shown in Fig. 17, the invention can also be used as a non-invasive measuring apparatus for obtaining information other than that described above by applying substantially the same configuration. For example, the invention can be used as a biological analyzer for the analysis of biological components involving the measurement and analysis of body fluids, such as blood. For example, if an apparatus that detects ethyl alcohol is used as the apparatus for measuring the body fluids, such as blood, the biological analyzer can be used as a drunk driving prevention apparatus that detects the drinking level of the driver. In addition, the invention can also be used as an electronic endoscope system including such a biological analyzer.

In addition, the invention can also be used as a mineral analyzer for analyzing the components of minerals.

In addition, the optical module and the electronic apparatus of the invention can be applied to the following apparatuses.

For example, it is possible to transmit data with light of each wavelength by changing the intensity of light of each wavelength with time. In this case, data transmitted by light having a specific wavelength can be extracted by separating the light having a specific wavelength using a wavelength tunable interference filter provided in the optical module and receiving the light having a specific wavelength using a light receiving unit. By processing the data of light of each wavelength using an electronic apparatus including such an optical module for data extraction, it is also possible to perform optical communication.

In addition, the electronic apparatus of the invention can also be applied as a spectral camera, a spectral analyzer, and the like for capturing a spectral image by separating light using the optical module of the invention. As an example of such a spectral camera, an infrared camera including a wavelength tunable interference filter can be mentioned.

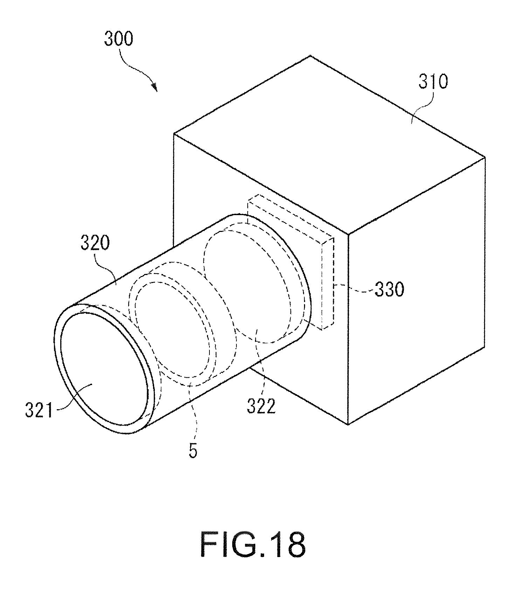

Fig. 18 is a schematic diagram showing the configuration of a spectral camera. As shown in Fig. 18, a spectral camera 300 includes a camera body 310, an imaging lens unit 320, and an imaging unit 330.

The camera body 310 is a portion gripped and operated by the user.

The imaging lens unit 320 is provided on the camera body 310, and guides incident image light to the imaging unit 330. In addition, as shown in Fig. 18, the imaging lens unit 320 is configured to include an objective lens 321, an imaging lens 322, and the wavelength tunable interference filter 5 provided between these lenses. In addition, the wavelength tunable interference filter 5A or 5B described above or an optical filter device 600 may be provided instead of the wavelength tunable interference filter 5.

The imaging unit 330 is formed by a light receiving element, and images image light guided by the imaging lens unit 320.

In the spectral camera 300, a spectral image of light having a desired wavelength can be captured by transmitting the light having a wavelength to be imaged using the wavelength tunable interference filter 5.

In addition, the optical module according to the invention may be used as a band pass filter. For example, the optical module according to the invention can be used as an optical laser device that separates and transmits only light in a narrow band having a predetermined wavelength at the center of light in a predetermined wavelength band emitted from a light emitting element.

In addition, the optical module according to the invention may be used as a biometric authentication device. For example, the optical module according to the invention can also be applied to authentication devices of blood vessels, fingerprint, retina, and iris using light in a near infrared region or a visible region.

In addition, the optical module and the electronic apparatus can be used as a concentration detector. In this case, using a wavelength tunable interference filter, infrared energy (infrared light) emitted from a material is separated and analyzed, and the object concentration in a sample is measured.

As described above, the optical module and the electronic apparatus according to the invention can also be applied to any apparatus that separates predetermined light from incident light. In addition, since the optical module according to the invention can separate light beams of a plurality of wavelengths using one device as described above, measurement of the spectrum of a plurality of wavelengths and detection of a plurality of components can be accurately performed. Accordingly, compared with a known apparatus that extracts a desired wavelength using a plurality of devices, it is possible to make an optical module or an electronic apparatus small. Therefore, the optical module according to the invention can be appropriately used as a portable optical device or an optical device for a vehicle, for example.

In addition, although the bonding between the substrates in the interference filter has been illustrated in each embodiment described above, the invention is not limited thereto, and can be applied to various kinds of bonded substrates in which the internal space is sealed in an airtight manner by bonding substrates to each other.

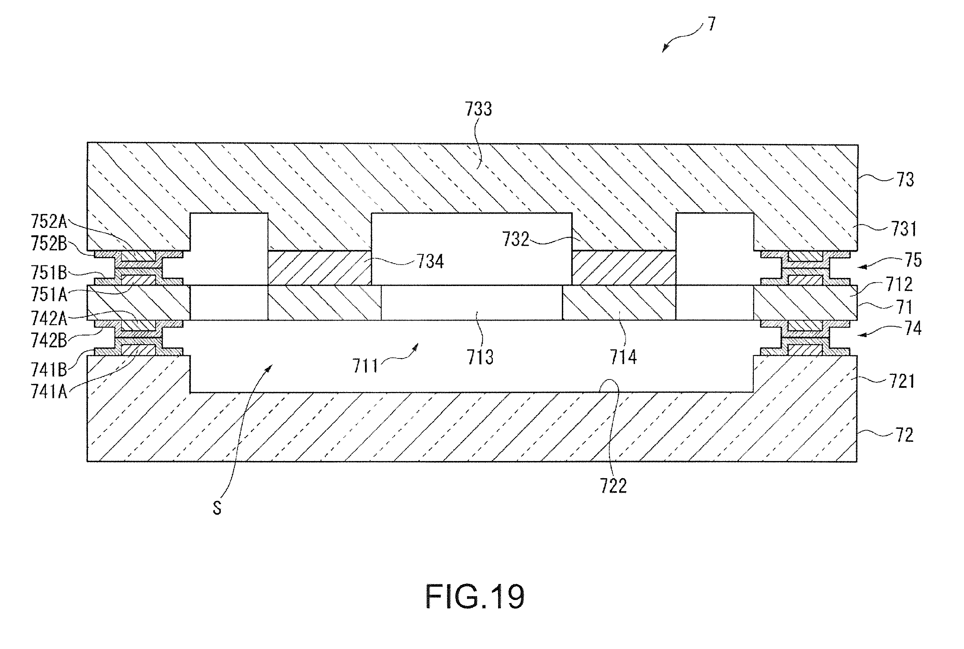

Fig. 19 is a diagram showing the schematic configuration of a pressure sensor that is an example of a bonded substrate in which a device is housed in the internal space sealed in an airtight manner.

A pressure sensor 7 includes a pressure sensitive substrate 71, a base substrate 72 that is bonded so as to seal one surface of the pressure sensitive substrate 71, and a diaphragm substrate 73 that is bonded so as to seal the other surface of the pressure sensitive substrate 71.

The pressure sensitive substrate 71 includes a pressure sensitive element 711 disposed in the middle and a frame portion 712. The pressure sensitive element 711 includes a pair of parallel columnar beams 713 and a pair of base portions 714 connected to both ends of each columnar beam, for example. In addition, excitation electrodes (not shown) are provided in the columnar beam 713. These excitation electrodes are connected to I/O electrodes (not shown) provided in the base portion, and the I/O electrodes are led out by lead-out electrodes extending to the frame portion 712.

The base substrate 72 is a substrate for sealing the internal space S in which the pressure sensitive element 711 is housed, and includes a frame portion 721 and a recess 722 provided inside the frame portion 721. The frame portion 721 is bonded to the frame portion 712 of the pressure sensitive substrate 71 by a first bonding portion 74.

The diaphragm substrate 73 forms a frame portion 731, a support portion 732, and a flexible portion 733 by processing a surface of the diaphragm substrate 73 facing the pressure sensitive substrate 71 by etching or the like. The frame portion 731 is bonded to the frame portion 712 of the pressure sensitive substrate 71 by a second bonding portion 75. The support portion 732 is bonded to the base portion 714 by a bonding material 734. The flexible portion 733 has a thickness smaller than the frame portion 731 and the support portion 732, is flexible, and is deformed when pressure is applied thereto.

In addition, the first and second bonding portions 74 and 75 have the same configuration as the bonding portions 57 and 58 in the first embodiment (or the bonding portions 57A in the second embodiment). That is, the first bonding portion 74 includes a resin layer 741A that is a base layer provided on a frame portion 721, a metal layer 741B that covers the resin layer 741A, a resin layer 742A that is a base layer provided on the frame portion 721, and a metal layer 742B that covers the resin layer 742A. In addition, the pressure sensitive substrate 71 and the base substrate 72 are bonded to each other by metal bonding between the metal layers 741B and 742B. In addition, similar to the first bonding portion 57 described above, a resin layer may be provided on only one of the frame portion 721 and the frame portion 712.

Similarly, the second bonding portion 75 includes a resin layer 751A that is a base layer provided on the frame portion 721, a metal layer 751B that covers the resin layer 751A, a resin layer 752A that is a base layer provided on the frame portion 731, and a metal layer 752B that covers the resin layer 752A. In addition, the pressure sensitive substrate 71 and the diaphragm substrate 73 are bonded to each other by metal bonding between the metal layers 751B and 752B. In addition, similar to the second bonding portion 58 described above, a resin layer may be provided on only one of the frame portion 712 and the frame portion 731.

Also in the pressure sensor 7, as in the first and the second embodiments described above, the pressure sensitive substrate 71 and the base substrate 72 and the pressure sensitive substrate 71 and the diaphragm substrate 73 can be bonded to each other by the bonding portions 74 and 75 in a state where high airtightness is maintained.

In addition, although an example in which the pressure sensor 7 is illustrated as an example of the bonded substrate and the pressure sensitive element 711 as a device is housed between a pair of substrates is shown in the example of Fig. 19, the invention is not limited thereto. In addition, as a device housed in the internal space S, a piezoelectric vibrator, a MEMS oscillator, an acceleration sensor, a piezoelectric element, a mirror device, and the like may be disposed.

In addition, the specific structure when implementing the invention can be appropriately changed to other structures in a range where the object of the invention can be achieved.

The following paragraphs disclose particular combinations of features relevant to the disclosed embodiments.
1. An interference filter, comprising:
   a first substrate;
   a second substrate disposed so as to face the first substrate;
   a first reflective film provided on a surface of the first substrate facing the second substrate;
   a second reflective film facing the first reflective film with a gap interposed between the first and second reflective films; and
   a first bonding portion that bonds the first and second substrates to each other to seal a first internal space formed between the first and second substrates,
   wherein the first bonding portion includes a first base layer provided on one of the first and second substrates, a first metal layer that is provided on the substrate, on which the first base layer is provided, so as to cover the first base layer and that has smaller plasticity than the first base layer, and a second metal layer that is provided on the other one of the first and second substrates and that is bonded to the first metal layer.
2. The interference filter according to paragraph 1,
   wherein the first bonding portion includes a second base layer that is provided on the other one of the first and second substrates and that has larger plasticity than the second metal layer, and the second metal layer is provided so as to cover the second base layer.
3. The interference filter according to paragraph 1, further comprising:
   a third substrate disposed on a side of a surface of the first substrate not facing the second substrate; and
   a second bonding portion that bonds the first and third substrates to each other to seal a second internal space formed between the first and third substrates,
   wherein the second bonding portion includes a third base layer provided on one of the first and third substrates, a third metal layer that is provided on the substrate, on which the third base layer is provided, so as to cover the third base layer and that has smaller plasticity than the third base layer, and a fourth metal layer that is provided on the other one of the first and third substrates and that is bonded to the third metal layer.
4. The interference filter according to paragraph 3,
   wherein the second bonding portion includes a fourth base layer that is provided on the other one of the first and third substrates and that has larger plasticity than the fourth metal layer, and the fourth metal layer is provided so as to cover the fourth base layer.
5. An interference filter, comprising:
   a first substrate;
   a second substrate disposed so as to face the first substrate;
   a first reflective film provided on a surface of the first substrate facing the second substrate;
   a second reflective film facing the first reflective film with a gap interposed between the first and second reflective films; and
   a first bonding portion that bonds the first and second substrates to each other to seal a first internal space formed between the first and second substrates,
   wherein the first bonding portion includes a first base layer that is formed of resin and is provided on one of the first and second substrates, a first metal layer that is provided on the substrate, on which the first base layer is provided, so as to cover the first base layer, and a second metal layer that is provided on the other one of the first and second substrates and that is bonded to the first metal layer.
6. The interference filter according to paragraph 5,
   wherein the first bonding portion includes a second base layer that is formed of resin and is provided on the other one of the first and second substrates, and
   the second metal layer is provided so as to cover the second base layer.
7. The interference filter according to paragraph 5, further comprising:
   a third substrate disposed on a side of a surface of the first substrate not facing the second substrate; and
   a second bonding portion that bonds the first and third substrates to each other to seal a second internal space formed between the first and third substrates,
   wherein the second bonding portion includes a third base layer that is formed of resin and is provided on one of the first and third substrates, a third metal layer that is provided on the substrate, on which the third base layer is provided, so as to cover the third base layer, and a fourth metal layer that is provided on the other one of the first and third substrates and that is bonded to the third metal layer.
8. The interference filter according to paragraph 7,
   wherein the second bonding portion includes a fourth base layer that is formed of resin and is provided on the other one of the first and third substrates, and
   the fourth metal layer is provided so as to cover the fourth base layer.
9. The interference filter according to paragraph 3, further comprising:
   a gap change portion that changes a size of a gap between the first and second reflective films,
   wherein the first and second internal spaces are sealed at pressure lower than atmospheric pressure.
10. The interference filter according to paragraph 1,
   wherein the second substrate has a bonding surface facing the first substrate and a first surface, a distance between the first surface and the first substrate being longer than a distance between the bonding surface and the first substrate, and
   the base layer is provided over the first surface from the bonding surface.
11. The interference filter according to paragraph 1,
   wherein the second substrate has a bonding surface facing the first substrate and a first surface, a distance between the first surface and the first substrate being longer than a distance between the bonding surface and the first substrate, and
   the base layer is provided over a portion of the first substrate facing the first surface from a portion of the first substrate facing the bonding surface.
12. The interference filter according to paragraph 1,
   wherein the base layer is a resin layer.
13. The interference filter according to paragraph 12,
   wherein the base layer is a plasma polymerized film containing polyorganosiloxane as a main component.
14. The interference filter according to paragraph 12,
   wherein the base layer is formed of an epoxy-based photosensitive material.
15. The interference filter according to paragraph 1,
   wherein the metal layer is formed of Au, Al, Ag, Cu, or an alloy of Au, Al, Ag, and Cu.
16. An interference filter manufacturing method, comprising:
   forming a first substrate and providing a first reflective film on the first substrate;
   forming a second substrate and providing a second reflective film on the second substrate;
   forming a first base layer on one of the first and second substrates;
   forming a first metal layer, which has smaller plasticity than the first base layer and covers the first base layer, on one of the first and second substrates and forming a second metal layer, which is bonded to the first metal layer, on the other one of the first and second substrates; and
   bonding the first and second metal layers to each other to seal a first internal space formed between the first and second substrates.
17. The interference filter manufacturing method according to paragraph 16,
   wherein, in the forming of the base layer, a second base layer having larger plasticity than the second metal layer is formed on the other one of the first and second substrates, and
   in the forming of the metal layer, the second metal layer is formed so as to cover the second base layer.
18. The interference filter manufacturing method according to paragraph 16, further comprising:
   forming a third substrate disposed on a side of a surface of the first substrate not facing the second substrate,
   wherein, in the forming of the base layer, a third base layer is formed on one of the first and third substrates,
   in the forming of the metal layer, a third metal layer that has smaller plasticity than the third base layer and covers the third base layer is formed on one of the first and third substrates, and a fourth metal layer bonded to the third metal layer is provided on the other one of the first and third substrates, and
   in the bonding of the metal layers, the third and fourth metal layers are bonded to each other to seal a second internal space formed between the first and third substrates.
19. The interference filter manufacturing method according to paragraph 18,
   wherein, in the forming of the base layer, a fourth base layer having larger plasticity than the fourth metal layer is formed on the other one of the first and third substrates, and
   in the forming of the metal layer, the fourth metal layer is formed so as to cover the fourth base layer.
20. The interference filter manufacturing method according to paragraph 16,
   wherein, in the bonding of the metal layers, activated bonding between the metal layers is performed by pressure after performing activation processing on surfaces of the metal layers.
21. The interference filter manufacturing method according to paragraph 20,
   wherein, the activation processing in the bonding of the metal layers is plasma treatment using inert gas.
22. The interference filter manufacturing method according to paragraph 16,
   wherein, in the bonding of the metal layers, the metal layers are pressed while being heated up to a bonding temperature lower than a temperature at which the first and second reflective films deteriorate.
23. The interference filter manufacturing method according to paragraph 16,
   wherein, in the forming of the base layer, the base layer is formed after performing plasma treatment on a surface of a base material provided below the base layer.
24. The interference filter manufacturing method according to paragraph 16,
   wherein, in the forming of the metal layer, the metal layer is formed after performing plasma treatment on a surface of a base material provided below the metal layer.
25. An optical module, comprising:
   a first substrate;
   a second substrate disposed so as to face the first substrate;
   a first reflective film provided on a surface of the first substrate facing the second substrate;
   a second reflective film facing the first reflective film with a gap interposed between the first and second reflective films;
   a first bonding portion that bonds the first and second substrates to each other to seal a first internal space formed between the first and second substrates; and
   a light receiving unit that receives light having a wavelength selected by interference of light beams incident between the first and second reflective films,
   wherein the first bonding portion includes a first base layer provided on one of the first and second substrates, a first metal layer that is provided on the substrate, on which the first base layer is provided, so as to cover the first base layer and that has smaller plasticity than the first base layer, and a second metal layer that is provided on the other one of the first and second substrates and that is bonded to the first metal layer.
26. An electronic apparatus, comprising:
   an interference filter including a first substrate, a second substrate disposed so as to face the first substrate, a first reflective film provided on a surface of the first substrate facing the second substrate, a second reflective film facing the first reflective film with a gap interposed between the first and second reflective films, and a first bonding portion that bonds the first and second substrates to each other to seal a first internal space formed between the first and second substrates; and
   a control unit that controls the interference filter,
   wherein the first bonding portion includes a first base layer provided on one of the first and second substrates, a first metal layer that is provided on the substrate, on which the first base layer is provided, so as to cover the first base layer and that has smaller plasticity than the first base layer, and a second metal layer that is provided on the other one of the first and second substrates and that is bonded to the first metal layer.
27. A bonded substrate, comprising:
   a pair of substrates;
   a bonding portion that bonds the pair of substrates to each other to seal an internal space formed between the pair of substrates; and
   a device housed in the internal space,
   wherein the bonding portion includes a base layer provided on one of the pair of substrates, a first metal layer that is provided on the substrate, on which the base layer is provided, so as to cover the base layer and that has smaller plasticity than the base layer, and a second metal layer that is provided on the other one of the pair of substrates and that is bonded to the first metal layer.

## Claims

1. An interference filter, comprising:
a first substrate;
a second substrate disposed so as to face the first substrate;
a first reflective film provided on a surface of the first substrate facing the second substrate;
a second reflective film facing the first reflective film with a gap interposed between the first and second reflective films; and
a first bonding portion that bonds the first and second substrates to each other to seal a first internal space formed between the first and second substrates,
wherein the first bonding portion includes a first base layer provided on one of the first and second substrates, a first metal layer that is provided on the substrate, on which the first base layer is provided, so as to cover the first base layer and that has smaller plasticity than the first base layer, and a second metal layer that is provided on the other one of the first and second substrates and that is bonded to the first metal layer.

2. The interference filter according to claim 1,
wherein the first bonding portion includes a second base layer that is provided on the other one of the first and second substrates and that has larger plasticity than the second metal layer, and the second metal layer is provided so as to cover the second base layer.

3. The interference filter according to claim 1, further comprising:
a third substrate disposed on a side of a surface of the first substrate not facing the second substrate; and
a second bonding portion that bonds the first and third substrates to each other to seal a second internal space formed between the first and third substrates,
wherein the second bonding portion includes a third base layer provided on one of the first and third substrates, a third metal layer that is provided on the substrate, on which the third base layer is provided, so as to cover the third base layer and that has smaller plasticity than the third base layer, and a fourth metal layer that is provided on the other one of the first and third substrates and that is bonded to the third metal layer.

4. The interference filter according to claim 3,
wherein the second bonding portion includes a fourth base layer that is provided on the other one of the first and third substrates and that has larger plasticity than the fourth metal layer, and the fourth metal layer is provided so as to cover the fourth base layer.

5. The interference filter according to any preceding claim, further comprising:
a gap change portion that changes a size of a gap between the first and second reflective films,
wherein the first and second internal spaces are sealed at pressure lower than atmospheric pressure.

6. The interference filter according to any preceding claim,
wherein the second substrate has a bonding surface facing the first substrate and a first surface, a distance between the first surface and the first substrate being longer than a distance between the bonding surface and the first substrate, and
the base layer is provided over the first surface from the bonding surface.

7. The interference filter according to any one of claims 1 to 5,
wherein the second substrate has a bonding surface facing the first substrate and a first surface, a distance between the first surface and the first substrate being longer than a distance between the bonding surface and the first substrate, and
the base layer is provided over a portion of the first substrate facing the first surface from a portion of the first substrate facing the bonding surface.

8. The interference filter according to claim 1,
wherein one or more of the first to fourth base layers is a resin layer,
a plasma polymerized film containing polyorganosiloxane as a main component, or
an epoxy-based photosensitive material.

9. The interference filter according to any preceding claim,
wherein the metal layer is formed of Au, Al, Ag, Cu, or an alloy of Au, Al, Ag, and Cu.

10. An interference filter manufacturing method, comprising:
forming a first substrate and providing a first reflective film on the first substrate;
forming a second substrate and providing a second reflective film on the second substrate;
forming a first base layer on one of the first and second substrates;
forming a first metal layer, which has smaller plasticity than the first base layer and covers the first base layer, on one of the first and second substrates and forming a second metal layer, which is bonded to the first metal layer, on the other one of the first and second substrates; and
bonding the first and second metal layers to each other to seal a first internal space formed between the first and second substrates.

11. The interference filter manufacturing method according to claim 10, wherein on or more of:
in the bonding of the metal layers, activated bonding between the metal layers is performed by pressure after performing activation processing on surfaces of the metal layers,
the activation processing in the bonding of the metal layers optionally being plasma treatment using inert gas;
in the bonding of the metal layers, the metal layers are pressed while being heated up to a bonding temperature lower than a temperature at which the first and second reflective films deteriorate;
in the forming of the base layer, the base layer is formed after performing plasma treatment on a surface of a base material provided below the base layer; and
in the forming of the metal layer, the metal layer is formed after performing plasma treatment on a surface of a base material provided below the metal layer.

12. An optical module, comprising:
a first substrate;
a second substrate disposed so as to face the first substrate;
a first reflective film provided on a surface of the first substrate facing the second substrate;
a second reflective film facing the first reflective film with a gap interposed between the first and second reflective films;
a first bonding portion that bonds the first and second substrates to each other to seal a first internal space formed between the first and second substrates; and
a light receiving unit that receives light having a wavelength selected by interference of light beams incident between the first and second reflective films,
wherein the first bonding portion includes a first base layer provided on one of the first and second substrates, a first metal layer that is provided on the substrate, on which the first base layer is provided, so as to cover the first base layer and that has smaller plasticity than the first base layer, and a second metal layer that is provided on the other one of the first and second substrates and that is bonded to the first metal layer.

13. An electronic apparatus, comprising:
an interference filter according to any one of Claims 1 to 9, and
a control unit configured to control the interference filter.

14. A bonded substrate, comprising:
a pair of substrates;
a bonding portion that bonds the pair of substrates to each other to seal an internal space formed between the pair of substrates; and
a device housed in the internal space,
wherein the bonding portion includes a base layer provided on one of the pair of substrates, a first metal layer that is provided on the substrate, on which the base layer is provided, so as to cover the base layer and that has smaller plasticity than the base layer, and a second metal layer that is provided on the other one of the pair of substrates and that is bonded to the first metal layer.
